(19) Europäisches Patentamt
European Patent Office
Office européen des brevets

(11) **EP 4 711 822 A1**

(12) **DEMANDE DE BREVET EUROPEEN**

(43) Date de publication:
**18.03.2026 Bulletin 2026/12**

(21) Numéro de dépôt: **25198037.1**

(22) Date de dépôt: **26.08.2025**

(51) Classification Internationale des Brevets (IPC):
**G01S 19/50** (2010.01)       **B61L 25/02** (2006.01)

(52) Classification Coopérative des Brevets (CPC):
**G01S 19/50; B61L 25/025;** B61L 2205/04;
G01S 19/20

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **16.09.2024 FR 2409830**

(71) Demandeur: **GTS France
78140 Velizy Villacoublay (FR)**

(72) Inventeurs:
• YU, Jeffrey
  **78140 VELIZY VILLACOUBLAY (FR)**
• BOYER, Loïc
  **78140 VELIZY VILLACOUBLAY (FR)**
• LAVIRON, Philippe
  **78140 VELIZY VILLACOUBLAY (FR)**

(74) Mandataire: **Atout PI Laplace
Immeuble Up On
25 Boulevard Romain Rolland
CS 40072
75685 Paris Cedex 14 (FR)**

(54) **PROCÉDÉ DE LOCALISATION D'UN ENGIN SUR UNE TRAJECTOIRE PRÉDÉFINIE, PROGRAMME D'ORDINATEUR ET DISPOSITIF ASSOCIÉS**

(57) L'invention concerne un procédé de localisation d'un train (4) se déplaçant sur un ensemble de voies $(V_1, V_2)$ sur lesquelles sont réparties des balises virtuelles définies par leurs coordonnées géographiques et doté d'un récepteur satellite embarqué recevant des signaux de géopositionnement de satellites $S_1, ... ; S_s$ pour chaque balise Bj, j = 1 à N et chaque satellite Sk, k = 1 à s :

calcul du retard de corrélation, $X(S_k, B_j)$ entre le signal de géostationnement reçu par le récepteur satellite en provenance de Sk et le signal de géostationnement théorique calculé comme devant être reçu en provenance de Sk en Bj ;

une valeur représentative du retard de corrélation $X(S_k, B_j)$ est convertie en une distance, $\Delta S_{Bj,Sk}$ en multipliant cette valeur représentative par c et en la divisant par le cosinus $el_k$ de l'élévation de Sk ;

il est déterminé $MSB_{Bj} = MAX_{k=1 \text{ à } s}\{\Delta S_{Bj,Sk}\}$

les $MSB_{Bj}$, j = 1 à N sont comparés à un seuil prédéfini $MSB_{REF}$: suite à cette comparaison, si seule une balise a un biais spatial maximum $MSB_{Bj}$ inférieur à $MSB_{REF}$, cette balise est alors détectée comme celle au niveau de laquelle le train se trouve.

FIG.1

EP 4 711 822 A1

**Description**

**Domaine technique** :

La présente invention concerne le domaine de l'estimation de position effectuée par géo-localisation satellite, par un système de positionnement par satellites également désigné sous le sigle *GNSS* (pour Géolocalisation et Navigation par un Système de Satellites.

**Technique antérieure** :

On distingue 2 catégories de positionnement GNSS : le positionnement absolu, où la localisation ne s'effectue que par pseudo-distances GNSS sans aucune information extérieure, et le positionnement différentiel ou relatif, où le positionnement se fait par rapport à une référence (stations de référence au sol). Ce dernier inclut des solutions telles que PPP (Positionnement Ponctuel Précis), RTK (Positionnement cinématique en temps réel) ou SBAS (Complément satellitaire d'un système GNSS).

Pour atteindre les niveaux de performance d'intégrité de sécurité (« Safety Integrity Level ») de niveau requis, SIL4, une infrastructure au sol est actuellement nécessaire (comprenant des balises réelles).

Le demandeur a antérieurement développé une solution de positionnement s'appuyant sur un calcul de corrélation entre un signal GNSS reçu et un code PRN prédit pour une position connue sur balises virtuelles géoréférencées : sans erreurs, un maximum de puissance de corrélation doit être observé pour l'hypothèse de position la plus proche du récepteur, permettant de détecter les positions possibles des balises virtuelles les plus proches du récepteur.

La précision absolue d'une position obtenue par un système de détermination de position, traditionnellement par triangulation de données issues des satellites et reçues par un récepteur satellite est entachée d'erreurs que l'on peut exprimer et sommer de la manière suivante :

$$UERE^2 = \left(E_{\_SIS}\right)^2 + \left(E_{\_Tropo}\right)^2 + \left(E_{\_Iono}\right)^2 + \left(E_{\_Rx}\right)^2 + \left(E_{\_Multitrajet}\right)^2$$

où

l'UERE (« User Equivalente Range Error ») est l'erreur de plage équivalente utilisateur ;

$E_{\_SIS}$ représente les erreurs du « Signal In Space » i.e. provenant des satellites (horloge satellite, trajectoire...)

$E_{\_Tropo}$, respectivement $E\_i_{ono}$, sont les erreurs liées aux interférences dues aux réflexions du SIS sur la couche troposphérique, respectivement ionosphérique ;

$E_{\_Rx}$ sont les erreurs propres au récepteur satellite, dues typiquement au bruit de mesure, au centre de phase et au biais d'horloge du récepteur ;

$E_{\_Multitrajet}$ sont les erreurs dues aux réflexions du signal satellitaire sur des obstacles avant d'atteindre le récepteur satellite.

L'erreur de position peut être modélisée et donc estimée en supposant que tous les satellites émettent correctement et en fonction du rapport signal à bruit (SNR) ; cependant cela reste une valeur statistique.

On classe aussi de la manière suivante les types d'erreurs de la liaison satellite-récepteur, suivant le lieu où elles se produisent :

-    erreurs « satellites », dues à : dérive des horloges (désynchronisation), description des orbites (éphémérides), centre de phase (polarisation de l'antenne) ;

-    erreurs « propagation », dues à : retard ionosphérique (couche de l'atmosphère de ~80 à 1 000 km d'altitude, effets liés à la présence de charges libre), retard troposphérique (couche de 0 à -80km d'altitude, effets liés principalement aux conditions météorologiques) ;

-    erreurs « réception », dues à : bruit de mesure, centre de phase, biais d'horloge ;

- erreurs « locales » dues à : multi-trajets, leurrage.

Il existe un besoin de disposer d'une solution de localisation fiable et applicable notamment aux contraintes du domaine ferroviaire.

**Résumé de l'invention** :

Suivant un premier aspect, la présente invention décrit un procédé de localisation d'un engin adapté pour se déplacer sur un ensemble de trajectoire(s) prédéfinie(s),

un récepteur satellite embarqué dans l'engin étant adapté pour recevoir à un instant t des signaux de géopositionnement en provenance d'un système de satellites comprenant au moins s satellites Sk, k=1 à s et s supérieur ou égal à 3 ;

un bloc électronique de traitement comprenant une base de données stockant les coordonnées géographiques Pj de balises virtuelles Bj, j = 1 à N, réparties le long des trajectoires dudit ensemble de trajectoire(s) ;

ledit procédé comprenant les étapes suivantes mises en œuvre par le bloc électronique de traitement à un instant t de localisation :

i1/ pour chaque balise Bj, j = 1 à N :

- pour chaque satellite Sk pour k = 1 à s :

  ▪ calcul du retard, entre le signal de géostationnement reçu par le récepteur satellite à l'instant t en provenance du satellite Sk et le signal de géostationnement théorique calculé comme devant être reçu en provenance du satellite Sk à l'instant t à la position de la balise virtuelle Bi telle définie par les coordonnées géographiques Pj de Bj dans la base de données, ledit retard étant nommé retard de corrélation, $X(S_k, B_j)$ ;

  ▪ une valeur représentative du retard de corrélation $X(S_k, B_j)$ est convertie en une distance correspondante, $\Delta S_{B\ j,Sk}$, nommée biais spatial, en multipliant cette valeur représentative du retard de corrélation $X(S_k, B_j)$ par c, vitesse de la lumière dans le vide et en la divisant par cos $el_k$, où $el_k$ est l'élévation du satellite Sk ;

- pour chaque balise Bj, j = 1 à N, il est déterminé un biais spatial maximum $MSB_{Bj}$ :

$$\mathrm{MSB}_{Bj} = \mathrm{MAX}_{k=1\,à\,s}\{\Delta S_{Bj,Sk}\}$$

i2/ les biais spatiaux maximum $MSB_{Bj}$, j= 1 à N sont comparés à un seuil prédéfini $MSB_{REF}$: suite à cette comparaison, si seule une balise a un biais spatial maximum $MSB_{Bj}$ inférieur à $MSB_{REF}$, cette balise est alors détectée comme celle au niveau de laquelle l'engin se trouve à l'instant de localisation.

L'innovation proposée utilise le principe de corrélation avec estimation de la meilleure position sur la base de mesures du retard de corrélation. Cette approche permet ainsi de garantir une intégrité autonome de la mesure, i.e. sans autres capteurs ou installations supplémentaires que le récepteur GNSS, et convient ainsi parfaitement à la navigation ferroviaire.
L'avantage conféré par l'utilisation des retards de corrélation est que, plutôt que d'identifier la balise la plus proche comme celle maximisant la puissance de corrélation (par exemple via $Argmax_{B_j}(\frac{1}{s}\sum_{k=1}^{s} Corr(S_k, B_j, t)^2)$

où Corr(S$_k$,B$_j$, t)$^2$ est le maximum de la puissance du signal de corrélation), on s'affranchit ainsi du biais dû au fait que le niveau de corrélation dépend de la puissance reçue, alors que le retard de corrélation lui, en est indépendant.
L'invention propose donc une solution de positionnement fiable, permettant de réduire les erreurs et elle prend en compte en outre un rayon de protection définissant une limite maximale d'erreur de précision tolérable.
Dans des modes de réalisation, un tel procédé comprendra en outre l'une au moins des caractéristiques suivantes :

- l'une des dispositions suivantes est en outre mise en œuvre par le bloc de traitement à l'étape i2 :

  - i2_1/ si seules deux balises ont leur biais spatial maximum inférieur à $MSB_{REF}$ et qu'elles sont adjacentes sur la même voie, il est considéré que l'engin se trouve entre les deux balises ;

  - i2_2/ si plus d'une balise a un biais spatial maximum inférieur à $MSB_{REF}$ (optionnellement en-dehors du cas juste ci-dessus) : une situation d'ambiguïté est détectée et il est considéré que la localisation ne peut être effectuée ;

  - i2_3/ si seules deux balises ont leur biais spatial maximum inférieur à $MSB_{REF}$ et qu'elles sont adjacentes sur la même voie, il est considéré que l'engin se trouve entre les deux balises ; en-dehors de ce cas, si plus d'une balise a un biais spatial maximum inférieur à $MSB_{REF}$, il est considéré que la localisation ne peut être effectuée ;

  - c i2_4/ si aucune balise n'a un biais spatial maximum $MSB_{Bj\_pos}$ inférieur à $MSB_{REF}$, cela indique l'existence de satellites défectueux, une situation d'ambiguïté est ainsi détectée et il est considéré que la localisation ne peut être effectuée ;

- les étapes i1 et i2 sont itérées relativement à chaque sous-ensemble de satellites comportant s-1 des s satellites à la place des s satellites considérés à l'itération précédente pour s≥5, lorsque, suite à ladite comparaison de l'itération précédente, seule une balise avait un biais spatial maximum $MSB_{Bj}$ inférieur à $MSB_{REF}$ et si à l'itération courante, pour chacun des sous-ensemble de satellites, l'étape de comparaison détecte la même seule balise qu'à l'itération précédente correspondant à un niveau d'intégrité donné, ladite balise est considérée comme détectée avec ledit niveau d'intégrité donné augmenté de un ;

- les étapes i1 et i2 sont itérées relativement à chaque sous-ensemble de satellites comportant s-1 des s satellites à la place des s satellites considérés à l'itération précédente pour s≥5, et si à l'itération précédente, aucune balise n'avait un biais spatial maximum $MSB_{Bj\_pos}$ inférieur à $MSB_{REF}$ et qu'à l'itération courante, une seule balise a un biais spatial maximum $MSB_{Bj}$ inférieur à $MSB_{REF}$, cette balise est alors détectée comme celle au niveau de laquelle l'engin se trouve à l'instant de localisation et le sème satellite est identifié comme défaillant ;

- ladite valeur représentative du retard de corrélation $X(S_k, B_j)$ est égale à la différence entre ledit retard de corrélation $X(S_k, B_j)$ et un biais nommé $BC_{Bj}$, qui est une estimation du biais temporel associé à la balise Bj et commun à tous les satellites et permettant de minimiser $MSB_{Bj}$ ;

  ladite valeur représentative du retard de corrélation $X(S_k, B_j)$ est égale à la différence entre ledit retard de corrélation $X(S_k, B_j)$ et un biais nommé $BC_{Bj} = \frac{1}{s} \sum_{k=1}^{s} X(S_k, B_j)$ ;

  le bloc de traitement met en œuvre l'une des dispositions suivantes i1a, i1b, i1c, pour, en considérant la balise Bi, mettre en œuvre l'étape i1 de calcul des retards, $X(S_k, B_i, t)$ pour k= 1 à s :

  i1a/ calcul de la corrélation entre ledit signal de géostationnement reçu et ledit signal de géostationnement théorique calculé en $B_i$, ledit retard $X(S_k, B_i, t)$ étant calculé en fonction au moins de ladite corrélation calculée ;

  i1b/ le retard $X(S_k, B_i, t)$ est calculé, par translation, à l'aide de la formule suivante :

$$X(S_k, B_i, t) = X(S_k, B_0, t) + \frac{1}{c}\left(S_k B_i - S_k B_0\right)$$

  , où $S_k B_0$, respectivement $S_k B_i$, est la distance entre le satellite $S_k$ et une balise de référence $B_0$, respectivement la distance entre le satellite $S_k$ et la balise $B_i$,

  $X(S_k, B_0, t)$ est le retard entre le signal de géostationnement reçu par le récepteur satellite à l'instant t en provenance du satellite $S_k$ et le signal de géostationnement théorique calculé comme devant être reçu en provenance du satellite $S_k$ à l'instant t à la position de la balise virtuelle $B_0$ telle définie par les coordonnées géographiques P0 de $B_0$ dans la base de données,

  c est la vitesse de la lumière dans le vide ;

  i1c/ le retard $X(S_k, B_i, t)$ est calculé, par translation, à l'aide de la formule suivante :

$$X(S_k, B_i, t) = X(S_k, B_0, t) + ds * \cos(el_k)/0.3$$

où $B_0$ est une balise de référence,

$\Delta la$ = latitude($B_0$) - latitude($B_i$), $\Delta lo$ = longitude($B_0$)- longitude($B_i$) $\alpha$ = arctan($\Delta la$ / ($\Delta lo$ *cos(latitude($B_0$))))

$$\beta = az_k + \alpha$$

$$ds = d * \sin(\beta)$$

où latitude(), longitude( ) sont les coordonnées dans un repère orthogonal dans le plan local tangent ;

- le bloc de traitement met en œuvre au moins une des dispositions suivantes 4.1, 4.2 :

4.1 par la mise en œuvre de la disposition i1a, $X(S_k, B_{01}, t)$ et $X(S_k, B_{02}, t)$ sont calculés ; puis en considérant $B_{01}$ comme balise de référence et par la mise en œuvre de l'une des formules en i1b ou i1c, le retard en $B_{02}$ est déterminé cette fois par translation en considérant $B_{01}$ comme balise de référence et est nommé $X(S_k, B_{02}, t)_{01}$ ; et en fonction d'au moins la différence entre $X(S_k, B_{02}, t)$ et $X(S_k, B_{02}, t)_{01}$, le satellite $S_k$ est exclu de l'ensemble des satellites pris en considération pour l'étape i3 d'estimation de la localisation de l'engin en fonction desdites valeurs représentatives d'écarts entre lesdits retards calculées ;

4.2 effectuer l'étape suivante pour des balises Bi, i = 1 à r :

par la mise en œuvre de l'une des formules en i1b ou i1c : un premier retard $X(S_k, B_i, t)_{01}$ est déterminé en considérant $B_{01}$ comme balise de référence et un deuxième retard $X(S_k, B_i, t)_{02}$ est déterminé en considérant $B_{02}$ comme balise de référence ;

et en fonction d'au moins les différences entre $X(S_k, B_i, t)_{01}$, et $X(S_k, B_i, t)_{02}$, i = 1 à r, le satellite $S_k$ est exclu de l'ensemble des satellites pris en considération pour l'étape i3 d'estimation de la localisation de l'engin en fonction desdites valeurs représentatives d'écarts entre lesdits retards calculées ;

- chaque balise considérée est espacée de ses voisines les plus proches d'une distance D égale à la distance entre deux voies voisines et le seuil prédéfini MSBREF est pris égal à D/2.

Suivant un autre aspect, l'invention décrit un programme d'ordinateur destiné à être stocké dans la mémoire d'un dispositif électronique comprenant en outre un microcalculateur, ledit programme d'ordinateur comprenant des instructions qui, lorsqu'elles sont exécutées sur le microcalculateur, mettent en œuvre les étapes d'un procédé selon l'invention.

Suivant un autre aspect, l'invention décrit un bloc électronique de traitement pour la localisation d'un engin adapté pour se déplacer sur un ensemble de trajectoire(s) prédéfinie(s) et embarquant un récepteur satellite pour recevoir à un instant t des signaux de géopositionnement en provenance d'un système de satellites comprenant au moins s satellites Sk, k=1 à s et s supérieur ou égal à 3 ;

le bloc électronique de traitement comprenant une base de données stockant les coordonnées géographiques Pj de balises virtuelles Bj, j = 1 à N, réparties le long des trajectoires dudit ensemble de trajectoire(s) ;

ledit bloc électronique de traitement étant adapté pour mettre en œuvre les opérations suivantes, à un instant t de localisation :
i1/ pour chaque balise Bj, j = 1 à N :

- pour chaque satellite Sk pour k = 1 à s :

calcul du retard, entre le signal de géostationnement reçu par le récepteur satellite à l'instant t en provenance du satellite Sk et le signal de géostationnement théorique calculé comme devant être reçu en provenance du satellite Sk à l'instant t à la position de la balise virtuelle Bi telle définie par les coordonnées géographiques Pj de Bj dans la base de données, ledit retard étant nommé retard de corrélation, $X(S_k, B_j)$ ;

une valeur représentative du retard de corrélation $X(S_k, B_j)$ est convertie en une distance correspondante, $\Delta S_{Bj,Sk}$ , nommée biais spatial, en multipliant cette valeur représentative du retard de corrélation $X(S_k, B_j)$ par c, vitesse de la lumière dans le vide et en la divisant par cos $el_k$, où $el_k$ est l'élévation du satellite Sk ;

- pour chaque balise Bj, j = 1 à N, il est déterminé un biais spatial maximum $MSB_{Bj}$ :

$$MSB_{Bj} = \text{MAX}_{k=1 \text{ à } s}\{\Delta S_{Bj,Sk}\}$$

i2/ les biais spatiaux maximum $MSB_{Bj}$, j= 1 à N sont comparés à un seuil prédéfini $MSB_{REF}$: suite à cette comparaison, si seule une balise a un biais spatial maximum $MSB_{Bj}$ inférieur à $MSB_{REF}$, cette balise est alors détectée comme celle au niveau de laquelle l'engin se trouve à l'instant de localisation.

**Brève description des figures** :

L'invention sera mieux comprise et d'autres caractéristiques, détails et avantages apparaîtront mieux à la lecture de la description qui suit, donnée à titre non limitatif, et grâce aux figures annexées, données à titre d'exemple.

[Fig. 1] La figure 1 représente schématiquement un système ferroviaire mettant en œuvre un mode de réalisation de l'invention ;

[Fig. 2] La figure 2 représente des étapes d'un procédé de détermination de position 100 dans un mode de réalisation de l'invention ;

[Fig. 3] La figure 3 illustre la relation entre biais temporel $\Delta T_{Bj,Sk}$ (= $X(S_k, B_j, t)$ ) et erreur spatiale » $\Delta S_{Bj,Sk}$ ;

[Fig. 4] La figure 4 représente les valeurs prises par une fonction de corrélation dans un exemple ;

[Fig. 5] La figure 5 représente des étapes d'un procédé de détermination de position 100 dans un mode de réalisation de l'invention ;

[Fig. 6] La figure 6 illustre le modèle géométrique considéré ;

[Fig. 7] La figure 7 illustre également le modèle géométrique considéré ;

[Fig. 8] La figure 8 représente un repère local tangent utilisé dans un des modes de réalisation de l'invention ;

[Fig. 9] La figure 9 illustre la détermination des biais spatiaux pour une balise tel que considéré dans l'étape 105 ;

[Fig. 10] La figure 10 illustre la correction du biais commun pour une balise et le biais spatial maximal déterminé pour cette balise tel que considéré dans l'étape 105 ;

[Fig. 11] La figure 11 est un organigramme définissant l'enchaînement des TESTS 1, 2 et 3 dans un mode de réalisation de l'invention ;

[Fig. 12] La figure 12 représente des « lignes de corrélation » ;

[Fig. 13] La figure 13 illustre le regroupement des balises en trajectoires dans un mode de mise en œuvre de l'invention ;

[Fig. 14] La figure 14 représente schématiquement un traitement effectué dans le cas d'un train en mouvement (cas dit dynamique).

Des références identiques peuvent être utilisées dans des figures différentes lorsqu'elles désignent des éléments identiques ou comparables.

**Description détaillée** :

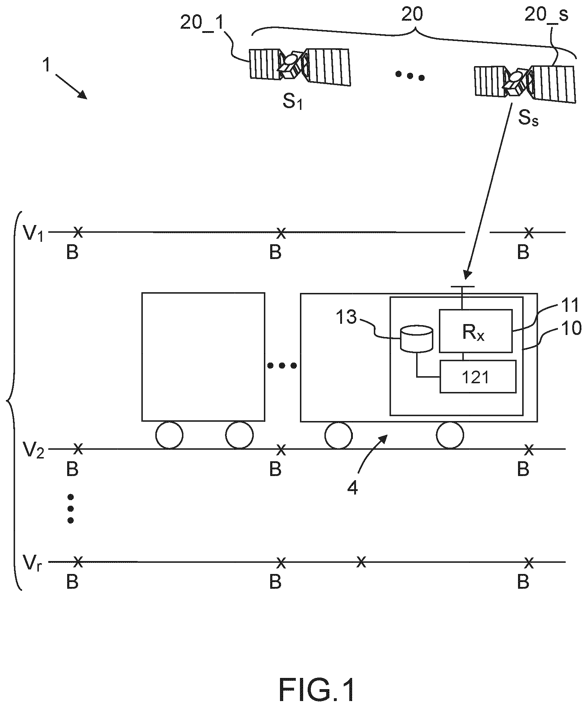

En référence à la Figure 1, un système ferroviaire 1 dans un mode de réalisation de l'invention comprend un ou plusieurs trains, dont le train 4 représenté en figure 1, et qui sont adaptés pour se déplacer sur une trajectoire prédéfinie ou des trajectoires prédéfinies diverses. Chacune de ces trajectoires est représentée par une suite de segments de voie (par exemple segments de rails gauches, ou droits, ou encore de segments -virtuels- disposés entre les rails droit et gauche...).

Le train 4 comporte un bloc électronique de traitement 10 embarqué, qui comprend :

- un bloc $R_x$ 11 comprenant un système de positionnement global par satellites GNSS standard,

- un bloc électronique de localisation 121,

- une base de données topographiques 13.

Sur la figure 1, des segments de r voies respectives $V_1$, $V_2$, ..., $V_r$ sont représentés.

Par la suite, on appellera « balise virtuelle » ou « balise », B, une position prédéterminée, ou point de référence, dont on connaît précisément les coordonnées spatiales. Les balises sont réparties sur les segments de voie, par exemple sur la ligne centrée entre les 2 rails de voie, ou à proximité de la voie, par exemple à moins de 50 cm de cette ligne.

Par exemple, la distance entre deux voies voisines étant égales à D, les balises sont espacées de leurs balises les plus proches sur la même voie d'une distance égale à D, avec D ici égale à 4 m par exemple (dans d'autres modes de réalisation, cette distance est inférieure à 4 m, par exemple égale à 2 m).

Les segments de voie ainsi que les balises sont en nombre fini. Leur position géographique 3D (par rapport à un référentiel terrestre) et leurs caractéristiques sont connues et sont référencées dans la base de données topographiques 13. Ces caractéristiques comprennent par exemple : identifiant de segment, identifiant de balise, longueur de segment, cap du segment (encore appelé cap de piste), association entre identifiant de segment et identifiant des balises situées sur (ou à proximité immédiate) du segment, valeur des paramètres géométriques par exemple de clothoïde ou de spline, caractéristiques de chaînage dans le réseau ferroviaire (par exemple : identifiant des segments successeurs et prédécesseurs).

Le bloc $R_x$ 11, embarqué à bord du train 4, est adapté pour, à partir d'une base de temps locale synchronisée, recevoir des signaux de géo-positionnement émis par un ensemble 20 de satellites de géo-positionnement GNSS : $S_1$ 20_1, ..., $S_s$ 20_s, en visibilité du bloc $R_x$ 11. Suivant les modes de réalisation, s = 1 ou s ≥ Nsat, avec Nsat égal à 2, 3, 4 ou 5.

Les satellites GNSS comportent par exemple des satellites du système américain GPS (Global Positioning System) et/ou du système européen GALILEO et/ou du système Glonass russe, et/ou du système Beidou chinois ou tout de autre système équivalent. Les positions, qui peuvent évoluer avec le temps, des satellites sont prédéterminées et connues du récepteur $R_x$ 11 (via des données d'éphémérides).

De façon connue, le récepteur GNSS dans le bloc $R_x$ 11 est adapté pour, à partir des signaux reçus, effectuer une descente en fréquence en bande de base, pour démoduler le signal et en extraire un signal de géopositionnement comportant la répétition d'un code à 1023 Hz. C'est ce signal mis sous cette forme qui est ensuite nommé « signal reçu » ci-dessous et qui est utilisé, par exemple pour les calculs de corrélation.

Par exemple, de façon connue, le récepteur GNSS est en outre adapté pour extraire des informations de temps et de retard de code PRN (Pseudo Random Noise, utilisé sur Galileo et GPS) et calculer, pour chaque satellite en vue, à partir de ces informations reçues, une estimation de la distance entre le dispositif de géolocalisation lui-même et le satellite en vue, également appelée pseudo-distance.

La pseudo-distance est différente de la distance effective entre le satellite considéré et le dispositif de géolocalisation à cause des erreurs citées plus haut : erreurs d'estimation du temps de propagation, dues par exemple aux conditions atmosphériques dans la troposphère, dans l'ionosphère et de l'erreur de synchronisation de l'horloge interne du récepteur de géolocalisation. Il est cependant possible d'éliminer les erreurs communes (dont le biais de temps du récepteur) en s'appuyant sur les informations transmises par une pluralité de satellites distincts.

Par exemple, le code PRN du signal d'acquisition C/A (pour « Coarse Acquisition » ou acquisition grossière) dans le cas GPS est un signal numérique composé de 1023 chips et qui se répète toutes les millisecondes. Il est à remarquer que le terme « chip » utilisé dans les techniques GNSS est à différencier du terme « bit » qui est utilisé pour définir une unité d'information. Le code a une longueur de code donnée, nommée $L(C/A)$. Sa longueur temporelle est de 1 ms, et donc sa longueur spatiale est de 1ms * c où c est la vitesse de la lumière. On en déduit une longueur temporelle de chip de 1 ms / 1023.

Le bloc de localisation 121 est adapté pour estimer la position du train 4 considérée à l'instant t.

Suivant les modes de réalisation, cette estimation de localisation prend des formes différentes. Par exemple, dans un mode de réalisation, elle comprend la détermination de la position de la balise estimée la plus proche du train 4 et/ou des coordonnées géographiques du récepteur $R_x$; elle permet dans un mode de réalisation la validation ou non d'une hypothèse de positionnement préalablement déterminée ; elle permet dans un mode de réalisation d'identifier le segment de voie sur lequel le train est a priori positionné (être certain de la voie du train est en effet un élément majeur de sécurité pour éviter des accidents).

L'estimation de la localisation est effectuée, selon l'invention, en fonction notamment des signaux de positionnement satellite reçus par le bloc $R_x$ 11 en sa position à estimer, et en outre, dans des modes de réalisation, en fonction par exemple de mesures d'une centrale inertielle embarquée et/ou en fonction de mesures par un odomètre.

**Procédé de détermination de position selon l'invention, en fonction de corrélations entre signaux prédits relatifs à des balises virtuelles et signaux reçus**

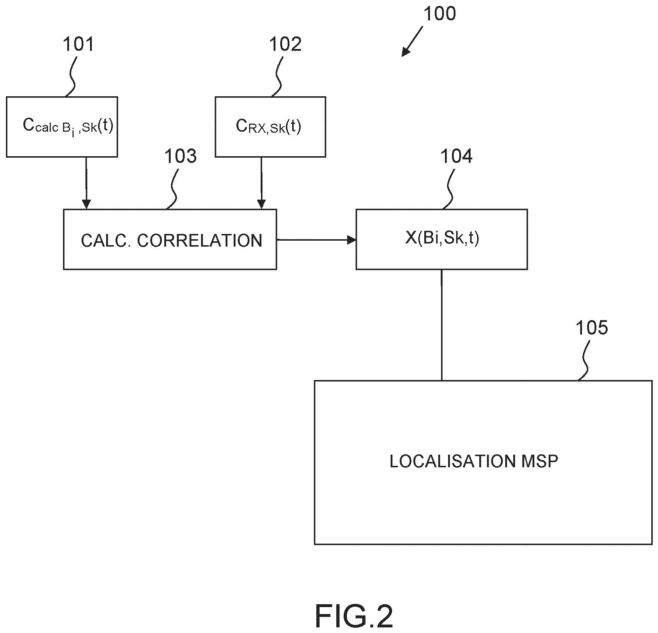

En référence à la figure 2, un procédé 100 de détermination de la position du train 4 à l'instant t est mis en œuvre par le bloc de traitement 10 ; il comprend un ensemble d'étapes 101 à 105, exploitant le signal GNSS reçu et la connaissance a priori des positions des balises virtuelles B fixées et prédéterminées fournie par la base des données topographiques 13.

Un tel procédé exploite le fait que la trajectoire du train 4 emprunte forcément les segments de voie ferrée, qui sont connus et sur lesquels figurent des balises.

Le traitement est mis en œuvre par corrélation du signal GNSS reçu, par le bloc $R_x$ 11, à la date t de référence locale du récepteur GNSS, en provenance des divers satellites visibles $S_k$, k = 1 à s (s étant, suivant les modes de réalisation, le nombre maximum des satellites disponibles ou un sous-ensemble), avec chacun des signaux de codes attendus (signaux de codes répliques) de ces satellites à la même date t de référence locale du récepteur GNSS, et calculés pour la position $P_i$ d'une balise virtuelle $B_i$.

Suivant les cas, les balises considérés $B_i$, i = 1 à N, sont l'ensemble des balises B, ou encore sont un sous-ensemble strict de cet ensemble des balises B (comportant donc un nombre réduit de balises et déterminé en tenant compte de certaines hypothèses de base considérées connues : train 4 situé sur une voie d'arrêt ou une voie de départ ou une voie de circulation, dans une zone géographique restreinte etc.). La balise $B_i$ est située en $P_i$, position géographique 3D, renseignée, en association avec $B_i$, dans la base 13.

Dans un mode de réalisation, le bloc de traitement 10 comprend un processeur et une mémoire, dans lesquelles sont stockées des instructions logicielles, qui lorsqu'elles sont exécutées sur le processeur, mettent en œuvre les étapes du procédé 100.

Ainsi, dans l'étape 101, les signaux théoriquement reçus (signaux répliques) à l'instant t au niveau de chaque balise considérée $B_i$, $c_{calc\,Bi,Sk}(t)$, en provenance de chaque satellite $S_k$ en vue de la balise sont prédits par le bloc de localisation 121 (car comme la position de la balise est connue, le temps de trajet du signal satellite à la balise est connu).

Lors de la génération des répliques GNSS locales des codes attendues, des erreurs sont prises en compte à l'aide de modèles d'erreur disponibles, i.e. les modèles d'erreur d'horloge, d'erreur ionosphérique et d'erreur troposphérique connus. Ces modèles d'erreur peuvent être fournis par le récepteur GNSS embarqué ou via une liaison d'assistance, et permettent de réduire les erreurs des distances attendues des satellites à quelques mètres.

Il est pris comme hypothèse que les erreurs résiduelles sur le retard de code après application des corrections sont gaussiennes centrées (dans un mode de réalisation, la validité de cette hypothèse est testée ensuite dans une démonstration d'intégrité).

Dans l'étape 102, à l'instant t, le bloc $R_x$ 11 reçoit, en sa position courante, les signaux $c_{RX,Sk}(t)$ envoyés par les satellites $S_k$, k = 1 à s et les fournit au bloc de localisation 121.

Dans l'étape 103, pour la balise $B_i$ et chaque satellite $S_k$, les corrélations entre signaux prédits $c_{calc\,Bi,Sk}(t)$ et signaux $c_{RX,Sk}(t)$ reçus à l'instant t par le bloc Rx 11 sont calculées par le bloc de localisation 121.

Les fonctions de corrélation sont calculées pour la balise $B_i$ et pour le satellite $S_k$ - au moins pour un certain nombre de valeurs prises par $\tau$ :

$$\Gamma_{Bi}^{Sk}(\tau) = \int c_{RX,k}(t).c_{calc\,Bi,k}(t-\tau)\,.\,dt$$

(l'intervalle d'intégration est par exemple fixé à la valeur T, typiquement égale à au moins la durée d'un bit de navigation, soit 20 ms soit 20 longueurs de code PRN).

Dans l'étape 104, pour la balise $B_i$ et pour le satellite $S_k$, le bloc de localisation 121 estime ensuite la valeur de $\tau$ en laquelle la fonction de corrélation $\Gamma_{Bi}^{Sk}(\tau)$ atteint son maximum ; cette valeur, qui est le retard de corrélation entre les deux signaux $c_{calc\,Bi,Sk}(t)$ et signaux $c_{RX,Sk}(t)$, est nommée $X(S_k, B_i, t)$.

Le retard de code $X(S_k, B_i, t)$ ainsi obtenu est en réalité composé d'un terme d'erreur de propagation et d'erreur résiduelle, ainsi que d'un terme géométrique dépendant de la distance entre la balise et le récepteur, et de l'azimut et de l'élévation du satellite considéré.

Dans l'étape 105, en fonction des retards de code à l'instant t considéré ainsi estimés $X(S_k, B_i, t)$ pour les balises considérées $B_i$, i = 1 à N et pour les satellites considérés $S_k$, k = 1 à s : le bloc de localisation 121 estime la localisation du train 4, de la manière décrite plus bas nommée solution MSP (de l'anglais « Maximal Spatial Protection »), après l'exposé d'éléments relatifs aux modèle géométrique et au modèle de mesure qui sont exploités par cette solution.

Exemple de recherche de position quand le train est à l'arrêt, sur une voie de garage ou de départ (cas dit statique) :

Dans un tel cas, on ne considère par exemple pour la mise en œuvre de l'algorithme 100 que les balises (ou un sous-ensemble de ces balises) de la base 13 qui y sont identifiées comme situées sur des segments de voies de garage ou de voies de départ. Ces sous-ensembles de balises sont donc, dans ce cas, les balises $B_i$, i=1 à N.

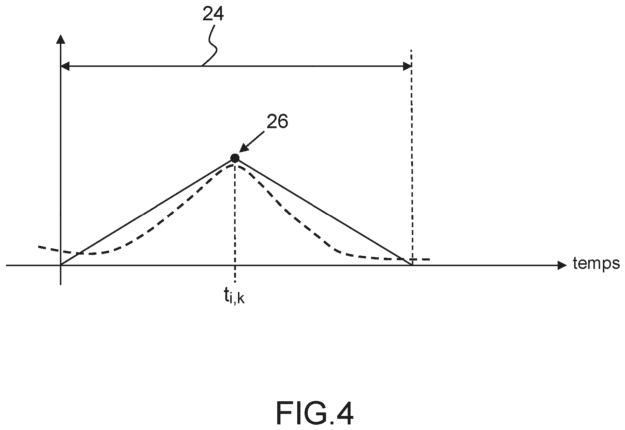

La figure 4 présente une représentation graphique unidimensionnelle, en fonction du temps représenté en abscisse, d'une fonction de corrélation mentionnée plus haut, schématisée d'une part sous forme de triangle, même si en réalité, sous l'impact du bruit, cette fonction prend plutôt l'aspect d'une courbe représentée en pointillé et considérée comme une parabole (interpolation parabolique) dans la zone du sommet 26.

La durée 24 est typiquement la durée d'un chip d'une séquence de code GNSS (typiquement pour le GPS un chip correspond à 1$\mu$s, i.e. 300m).

Cette fonction de corrélation comporte un maximum 26, tel que déterminé, d'abscisse $t_{i,k}$ qui est donc le retard de code. Dans des modes de réalisation, une interpolation est en outre, réalisée pour mieux estimer la position du maximum.

Dans des modes de réalisation, lors du calcul des valeurs de la fonction de corrélation pour la balise $B_i$ et le satellite $S_k$, i = 1 à N et k = 1 à s, les étapes suivantes sont réalisées (à l'aide notamment de trois modules multiplieurs et trois modules intégrateurs) :

- un produit de convolution est effectué : le signal satellite reçu $c_{RX,k}(t)$ est multiplié avec le signal réplique $c_{calc\,Bi,k}(t)$ qui est la réplique a priori parfaitement alignée du code (si le train est positionné en Pi et en l'absence d'erreurs non compensées), puis le résultat est intégré : la valeur de sortie, nommée Prompt (P), est représentative de la corrélation entre ces deux signaux ;

- le signal satellite reçu $c_{RX,k}(t)$ est multiplié avec le signal réplique avancé $c_{calc\,Bi,k}(t+\delta)$, puis le résultat est intégré : la valeur de sortie, nommée Early (E) est représentative de la corrélation entre ces deux signaux ; par exemple la valeur $\delta$, positive, par exemple est égale à 7,5 ns( l'idée étant d'avoir un intervalle Early-Late prédéfini qui est représentatif du besoin en précision, notamment la détection de voie ; les voies étant considérées espacées de 4m, soit 15ns en temporel, on choisit par exemple ici un écart de 15ns entre les points Early et Late).

- le signal satellite reçu $c_{RX,k}(t)$ est multiplié avec le signal réplique retardé $c_{calc\,Bi,k}(t-\delta])$ , puis le résultat est intégré : la valeur de sortie, nommée Late (L) est représentative de la corrélation entre ces deux signaux ;

- dans des modes de réalisation, afin d'obtenir davantage de points de la fonction de corrélation, des signaux répliques supplémentaires avancés et retardés des valeurs de décalage $\delta1$, $\delta2$, sont par exemple également multipliés et intégrés.

On considère dans ce qui suit que le Doppler est parfaitement connu.

**Modèle géométrique**

Le retard de corrélation $X(S_k, B_j, t)$ correspond au retard de code mesuré entre le signal reçu par le récepteur $R_x$ en provenance du satellite $S_k$ et le signal prédit au niveau d'une balise $B_j$ considérée.

En l'absence d'erreur de propagation, d'erreur satellite, d'erreur récepteur et d'erreurs locales, $X(S_k, B_j, t)$ est donc la différence de temps de trajet entre le trajet satellite-balise et le trajet satellite-récepteur.

On a alors $X(S_k, B_j, t) = \frac{1}{c}(S_k B_j - S_k R_x)$ pour le satellite $S_k$ et la balise $B_j$. Avec des considérations géométriques, cette relation peut s'exprimer au premier ordre en fonction de la distance entre le récepteur et la balise.

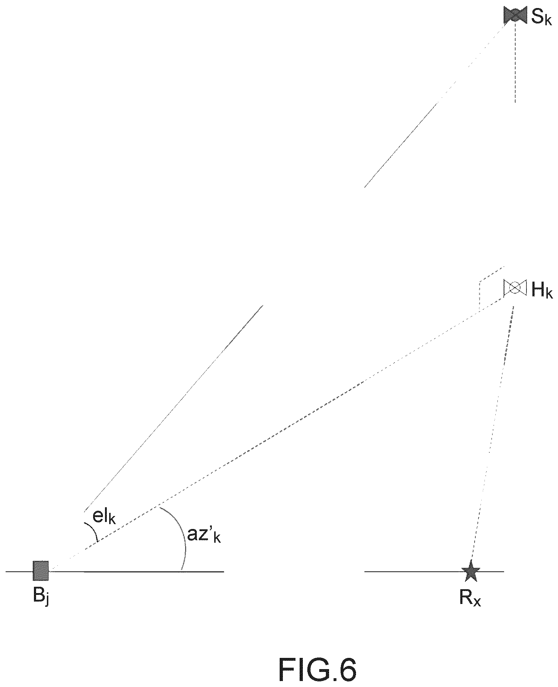

En référence à la figure 6, en nommant :

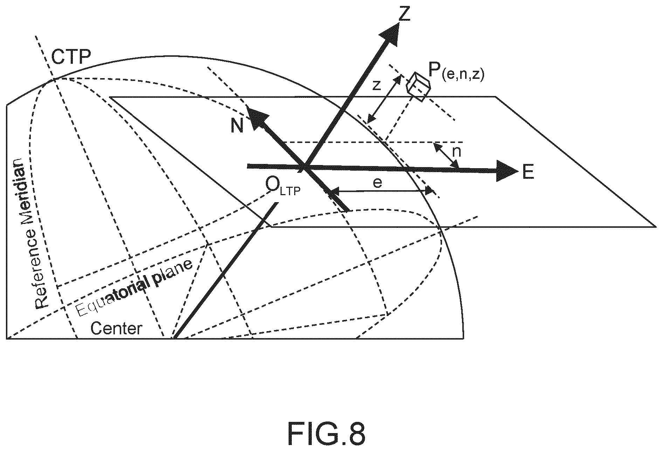

- $H_k$ le projeté orthogonal de la position de $S_k$ dans le plan local tangent à la terre à l'endroit considéré (et par exemple associé au repère NED (« North, East, Down ») ou ENU (« East (E), North (N), Up (Z) » : voir en figure 8),
- $el_k$ l'élévation du satellite $S_k$ et $az_k$' l'azimut relatif du satellite $S_k$ par rapport à la ligne entre la balise Bj et le récepteur $R_x$,

on a :

$$X\big(S_k, B_j, t\big) = \frac{1}{c}\big(S_k B_j - S_k R_x\big) = \frac{H_k B_j - H_k R_x}{c.\cos(el_k)}$$

c étant la vitesse de la lumière dans le vide.

En appliquant le théorème d'Al Kashi dans le triangle $H_k B_k R_k$ on obtient :

$$H_k R_x = \sqrt{H_k B_j^2 + R_x B_j^2 - 2.\cos(az_k').\,H_k B_j.\,R_x B_j}$$

$$H_k R_x = H_k B_j \sqrt{1 + \frac{R_x B_j^2}{H_k B_j^2} - 2.\cos(az_k').\frac{R_x B_j}{H_k B_j}}$$

Le radical se développe au premier ordre, ce qui donne :

$$H_k R_x \approx H_k B_j - \cos(az_k').\,R_x B_j$$

et en considérant maintenant l'équation plus haut de $X(S_k, B_j, t)$ :

$$\big|X\big(S_k, B_j, t\big)\big| \approx \frac{\big|\cos(az_k').\,R_x B_j\big|}{c.\cos(el_k)}$$

Cette approximation peut être physiquement considérée comme une égalité vu la différence d'ordre de grandeur entre les distances $S_k B_j$ et $R_x B_j$. Il en ressort que l'on peut alors écrire le retard du signal reçu par rapport au signal prédit : :

$$X\big(S_k, B_j, t\big) = \frac{\cos(az_k').\,R_x B_j}{c.\cos(el_k)}$$

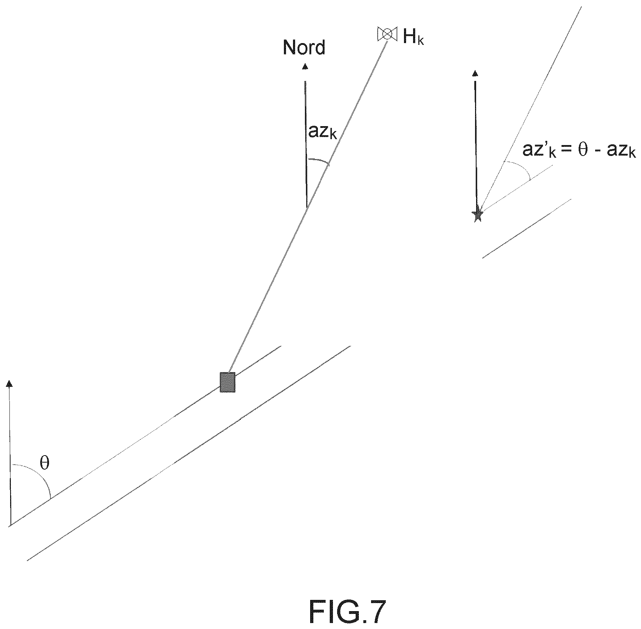

Cas de l'azimut relatif : L'azimut relatif $az_k' = \overrightarrow{B_j R_x}\,;\,\overrightarrow{B_j H_k}$ peut être exprimé en fonction de l'azimut $az_k$ du satellite $S_k$ et du cap de piste $\theta$ si le récepteur $R_x$ est situé sur la même voie que la balise $B_j$: $az_k' = \theta - az_k$ (voir figure 7).

$$X\big(S_k, B_j, t\big) = \frac{\cos(\theta - az_k).\,R_x B_j}{c.\cos(el_k)}$$

Cette expression exprimée s'écrit avec un produit scalaire ainsi :

$$X\big(S_k, B_j, t\big) = \frac{\cos(az').R_x B_j}{c.\cos(el)} = \frac{1}{c}\overrightarrow{B_j R_x}.\overrightarrow{LOS_{S_k}}$$

où $LOS_{S_k}$ est le vecteur de ligne de visée (« Line Of Sight »), de norme unitaire, partant de la balise $B_j$ (ou du récepteur $R_x$, vu les distances) et pointant vers le satellite $S_k$.

**Modèle de mesure**

La mesure de $X(S_k, B_j, t)$ (i.e. le résultat du calcul effectué à l'étape 104 en fonction du signal reçu) est entachée d'erreurs liée à la prédiction du signal et au corrélateur, venant de plusieurs sources parmi lesquelles :

- erreur de correction/modélisation de la propagation du signal reçu (ionosphère, troposphère) ;
- erreurs satellites (orbites et horloge satellite) impactant la prédiction du temps d'émission et de la position satellite ;

- erreurs récepteur (horloge, retard de groupe) pour l'estimation du temps d'émission ;
- erreur locales (multitrajet, leurrage) rallongeant le temps de propagation du signal reçu ;
- sensibilité/résolution du corrélateur et bruit de corrélation.

Ces erreurs ont des propriétés spatiales et temporelles qui différent, et influencent différemment la valeur de $X(S_k, B_j, t)$.

Les erreurs de correction ionosphérique et troposphérique s'ajoutent directement à la différence de temps de trajet géométrique, et sont localement les mêmes pour toutes les balises.

En regroupant d'un côté les erreurs liées au récepteur communes à tous les satellites ($b_{rec}$) et d'un autre côté, les erreurs spécifiques à chaque satellite (orbite, horloge satellite, erreur de modèle ionosphérique et troposphérique, multi trajets, ...) qu'on nomme $b_{Sk}$ et en nommant $\tilde{X}(S_k, B_j, t)$ la valeur mesurée (i.e. calculée à partir des mesures du signal reçu et donc intégrant les erreurs) :

$$\tilde{X}\left(S_k, B_j, t\right) \ = \frac{1}{c}\overrightarrow{B_J R_x}.\overrightarrow{LOS_{S_k}} + b_{rec} + b_{Sk}$$

**Principes sur lequel le processus MSP repose**

La méthode MSP repose sur le concept d'équivalence entre le domaine temporel et le domaine spatial/géométrique.

Dans ce qui suit, on considère les valeurs de retard, $X(S_k, Bj, t)$, fournies en sortie de l'étape 104 pour l'ensemble considéré des balises $B_j$, j = 1 à N et l'ensemble considéré des satellites $S_k$, k = 1 à r, pour un instant de détermination de localisation t.

La valeur de retard, $X(S_k, B_j, t)$, entre le signal reçu et le signal prédit depuis le satellite $S_k$ au niveau d'une balise $B_j$, est un *biais temporel* ; on le renomme $\Delta T_{Bj,Sk}$. Il peut être 'projeté' et ainsi être converti en une *distance* dans le plan des trajectoires, que l'on nommera « biais spatial » $\Delta S_{Bj,Sk}$. Ce biais spatial est une distance qui est fonction de la position du satellite $S_k$ dans le ciel (avec une élévation, notée $el_k$) et de la vitesse de la lumière c (d'une part, la relation Vitesse = Distance/Temps est exploitée ; d'autre part. la prise en compte d'un $\cos(el_k)$ applique une correction pour prendre en compte la sensibilité de l'erreur en fonction de l'élévation du satellite).

Il est défini par l'équation suivante dans le cas d'une balise B et d'un satellite $S_k$ :

$$\Delta S_{Bj,Sk} = \frac{c * \Delta\mathrm{T}_{\mathrm{Bj,Sk}}}{\cos\left(el_k\right)}$$

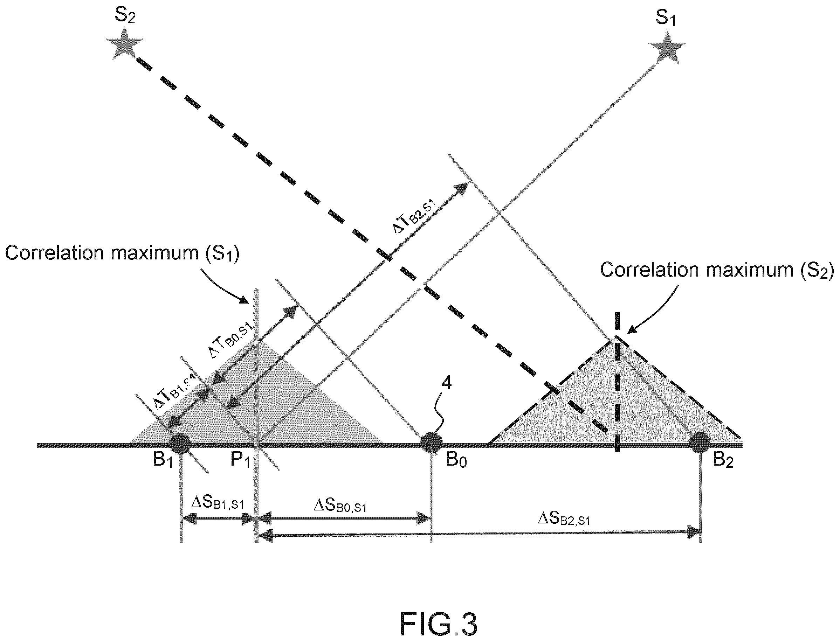

La figure 3 illustre graphiquement cette relation, le train 4 dont on recherche la position se trouvant localisé au niveau de $B_0$. Les aspects relatifs au satellite $S_1$ sont représentés en traits pleins, ceux relatifs au satellite $S_2$ sont représentés en tirets.

Sur cette figure 3 :

- $\Delta T_{B1,S1}$ représente $X(S_1, B_1, t)$, le retard temporel entre le maximum de corrélation pour le signal reçu et le signal prédit pour le satellite $S_1$ à la balise $B_1$ ;

- P1 appartenant à la ligne de maximum de corrélation de S1, une corrélation maximale pour S1 est mesurée en P1, i.e. le retard entre signal prédit et signal reçu est nul ;

- $\Delta S_{B1,S1}$ représente le biais spatial associé au biais temporel mesuré $\Delta T_{B1,S1}$.

**Solution MSP**

Le processus mis en œuvre dans l'étape 105 par le bloc de localisation 121 conformément à l'invention, dit processus MSP (pour rappel, de l'anglais « Maximal Spatial Protection »), comprend l'opération de déterminer, en fonction des retards de corrélation déterminés $X(S_k, B_i, t)$, à l'instant t, pour i = 1 à N et k = 1 à s, la balise la plus proche du récepteur comme étant celle des balises vérifiant les conditions suivantes :

- la balise doit correspondre une distance (biais spatial), inférieure à un seuil prédéfini, des lignes de maximum de corrélation après correction d'un biais supposé commun à tous les satellites.;

- la balise doit en outre être la seule, parmi les balises, à assurer une distance inférieure au seuil prédéfini, des lignes de maximum de corrélation, après correction d'un biais supposé commun à tous les satellites.

Le seuil prédéfini, que l'on nomme ici MSB$_{REF}$ est par exemple fixé à la moitié de la distance D séparant deux balises voisines (la valeur du seuil est considérée comme la plage de protection du positionnement ; pour un démarrage à froid, elle doit être égale à la moitié de la distance entre la voie et sa voie voisine. pour déterminer la voie en toute sécurité). Dans le cas considéré ici MSB$_{REF}$ est égal à 2m.

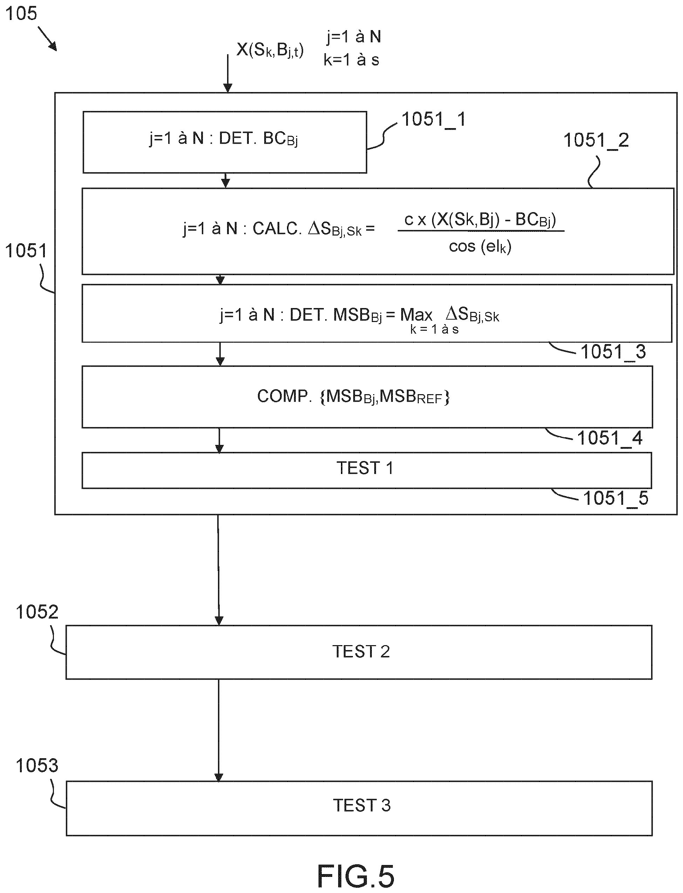

En référence à la figure 5, dans un mode de réalisation du processus MSP exécuté à l'étape 105, un premier test, nommé TEST 1, est réalisé lors d'une étape 1051.

Au cours de cette étape 1051, les sous-étapes 1051_1 à 1051_5 sont mises en œuvre par le bloc de localisation 121 (cela revient à étudier chaque hypothèse correspondant à « chaque balise est celle en laquelle le récepteur 11 est positionné »).

Dans la sous-étape 1051_1, pour chaque balise B$_j$ considérée, la valeur, nommée BC$_{Bj}$, du biais temporel associé à la balise et commun à tous les satellites permettant de minimiser le plus grand biais spatial résiduel correspondant, est estimée.

Dans la sous-étape 1051_2, pour chaque balise B$_j$ considérée, le biais spatial résiduel (après correction du biais commun), nommée $\Delta S_{Bj,Sk}$ pour chaque satellite Sk est déterminé :

$$\Delta S_{Bj,Sk} = \frac{c*(\Delta T_{Bj,Sk} - BC_{Bj})}{\cos(el_k)}, \text{ pour k = 1}$$

à s

Dans la sous-étape 1051_3, pour chaque balise B$_j$ considérée, la distance correspondant au plus grand biais spatial résiduel (après correction du biais commun), nommée MSB$_{Bj}$ (pour l'anglais « Maximum Spatial Bias ») est maintenant déterminée :

$$MSB_{Bj} = MAX_{k=1 \text{ à } s}\{\Delta S_{Bj,Sk}\}$$

Dans la sous-étape 1051_4, les plus grand biais spatiaux résiduels des balises MSB$_{Bj}$ sont comparés au seuil prédéfini MSB$_{REF}$ (parmi l'ensemble des balises, seulement une, Bj_pos est censée avoir un plus grand biais spatial résiduel MSB$_{Bj\_pos}$ inférieur à MSB$_{REF}$).

Dans la sous-étape 1051_5, le test TEST 1 est effectué, pour valider la bonne correspondence entre la détection de biais et la géométrie de la topographie (base 13) :

- si seule une balise, B$_{j\_pos}$ a un plus grand biais spatial résiduel MSB$_{Bj\_pos}$ inférieur à MSB$_{REF}$, cette balise est alors considérée comme celle au niveau de laquelle le récepteur 11 se trouve à l'instant t (situation de détection de balise réussie) ; et dans un mode de réalisation, le TEST suivant est effectué si le nombre de satellite couramment considéré est supérieur ou égal à 5, pour obtenir un niveau d'intégrité supérieur le cas échéant ;

- si aucune balise n'a un plus biais spatial maximum MSB$_{Bj\_pos}$ inférieur à MSB$_{REF}$, la position du récepteur 11 ne peut être ainsi déterminée (dans ce cas, il n'y a donc pas eu détection de balise) ; on considère dans un mode de réalisation qu'un ou deux satellites est défaillant et dans un mode de réalisation, le TEST suivant est effectué si le nombre de satellite couramment considéré est supérieur ou égal à 5 ;

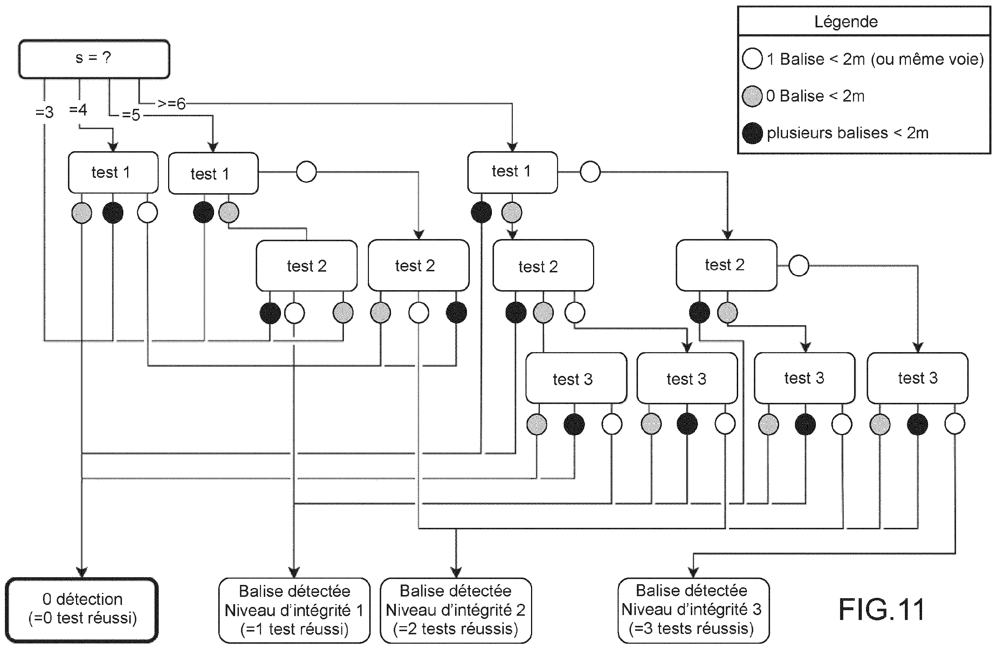

- dans un mode de réalisation, il est considéré, si seules deux balises ont leur plus grand biais spatial inférieur à MSB$_{REF}$ et qu'elles sont adjacentes sur la même voie, il est considéré que le train 4 se trouve entre les deux balises (cela correspond au cas (ou autre) dans la légende en figure 11) ;

- dans un mode de réalisation, si plus d'une balise a un biais spatial maximum inférieur à MSB$_{REF}$ (optionnellement en-dehors du cas juste ci-dessus) : une situation d'ambiguïté est ainsi détectée et il est considéré que la localisation ne peut être effectuée (cette situation indique typiquement une distribution de satellite non satisfaisante).

Différentes méthodes sont applicables pour déterminer le biais commun de la sous-étape 1051_1, pour la balise B$_j$. Dans un mode de réalisation, le biais commun BC$_{Bj}$ est pris égal à la moyenne, calculée sur l'ensemble des satellites, du biais temporel pour la balise B$_j$ :  $BC_{Bj} = \frac{1}{s}\sum_{k=1}^{s}\Delta T_{Bj,Sk}$. Dans un autre mode de réalisation, toutes les valeurs entières possibles de biais commun temporel sont testées (la plage de valeurs possibles s'étend du $\Delta T_{Bj,Sk}$ minimum au $\Delta T_{Bj,Sk}$ maximum, parmi les $\Delta T_{Bj,Sk}$, k = 1 à s ; pour chaque hypothèse de biais commun, les biais temporels résiduels sont convertis en biais spatiaux ; puis, on retient le biais spatial maximum ; par la suite, l'algorithme retient l'hypothèse de biais temporel qui permet de minimiser le biais spatial maximum ($MSB_{Bj}$).

Les sous-étapes 1051_1 et 1051_2 sont optionnelles.

Dans un mode de réalisation du processus MSP, en référence à la figure 5, le test suivant le TEST1, nommé TEST 2, est réalisé : lors d'une étape 1052, les étapes 1051_1 à 1051_5 précédemment effectuées correspondant sont alors répétées, en considérant cette fois un à un chacun des sous-groupes de satellites comportant un satellite de moins que l'ensemble des satellites considérés pour les 1051_1 à 1051_5 relatives au TEST 1.

En outre, il est vérifié que tous ces sous-ensembles de satellites détectent la même balise qu'au test précédent le cas échéant, sinon il y a une situation d'ambiguïté et le TEST 2 est considéré comme non réussi (i.e. localisation non détectée).

Si il n'avait pas été détecté de balise au test de niveau précédent, mais qu'une balise est détectée correctement au TEST 2 en supprimant un satellite, ce satellite est considéré comme défaillant et la détection est considérée comme réussie avec une intégrité de niveau 1.

Si aucun sous-ensemble ne satisfait le critère de 2m, alors le test échoue.

Dans un mode de réalisation du processus MSP, en référence à la figure 5, un autre test, TEST 3 est réalisé lors d'une étape 1053, après l'étape 1052 relative au TEST 2, pour s considéré initialement supérieur ou égal à 6, et si le résultat du test 2 concluait à la détection de zéro, ou d'un seule, balise avec MSB < 2m. Le principe est le même que pour le TEST 2, mais les sous-ensembles de satellites considérés comporte s-2 satellites et non plus s-1 satellites.

Un organigramme d'un exemple d'enchaînement des tests 1, 2, 3 est représenté en figure 11, dans un mode de réalisation de l'invention, pour un $MSB_{REF}$ = 2 m.

La solution MSP assure un rayon de protection de valeur $MSB_{REF}$, (ici égal à 2 m) autour de chaque balise.

La vérification de satisfaction du critère de rayon protection (égal à $MSB_{REF}$ ici 2m) est commune aux 3 niveaux de test successifs considérés dans le mode de réalisation décrit : elle vise à vérifier s'il existe bien une seule et même balise unique dont les lignes de corrélation satellite sont à une distance inférieure à 2m (après, dans le mode de réalisation considéré, correction du biais supposé commun). Les niveaux de test 2 et 3 sont des variantes avec l'ajout d'une cohérence de détection pour tous les sous-groupes de satellites.

La détection de balise est, dans le mode de réalisation décrit ci-dessus, associée à un niveau de confiance sur l'intégrité. En effet, le processus MSP ici considéré est composé de 3 tests successifs au maximum. Pour chaque test, il y a en réalité 3 résultats possibles et non pas juste un résultat binaire KO ou OK ; le 3ème résultat est celui où aucune balise ne vérifie que son MSB <2m ; soit de façon synthétique :

- résultat 1 : « Succès » (= test OK) : quand il existe une seule balise avec MSB $\leq$ $MSB_{REF}$ ou quand seules deux balises successives (ex. le long de la voie) ont MSB $\leq$ $MSB_{REF}$

- résultat 2 : « Ambiguïté » (= test KO) : quand plus de deux balises (ne correspondant pas au cas précédent) ont MSB $\leq$ $MSB_{REF}$

- résultat 3 : « Débordement » (« overflow », qui indique l'existence de satellite(s) défectueux) : quand aucune balise avec MSB $\leq$ $MSB_{REF}$

Dans l'étape 1051 de test 1, c'est uniquement dans ce cas de 3ème issue et dans le cas OK, que l'on passe au test 2.

Dans le test 2, le traitement des sous-ensembles de satellites doit avoir le même résultat pour tous les sous-ensembles. Le succès du sous-ensemble augmentera l'intégrité de la détection et poursuivra le traitement au Test 3. Si des cas ambigus sont détectés, le traitement est arrêté avec le niveau d'intégrité 1. S'il y avait eu un résultat de Débordement au Test1, si pour un sous-ensemble de s-1 satellites, on a bien une seule balise avec MSB $\leq$ $MSB_{REF}$, cela signifie qu'un satellite défectueux est détecté (celui des s satellites ne faisant pas partie de ce sous-ensemble de s-1 satellites) . On a donc ici une méthode pour détecter les satellites défectueux. Si un satellite défectueux est détecté, le traitement est poursuivi par la réalisation du Test 3. Si pour tous les sous-ensembles considérés au Test 2, > $MSB_{REF}$, le MSB > cela indique l'existence de deux satellites défaillants, et le traitement se poursuit avec la réalisation du Test 3.

Le niveau d'intégrité de la solution en sortie dépend du nombre de paliers de tests réussis (ie ayant donné lieu à une détection) :

- niveau d'intégrité 1 correspond à 1 test réussi ;

- niveau d'intégrité 2 correspond à 2 tests réussis (2 tests =OK donne lieu à un niveau d'intégrité 2 ; par exemple, on peut avoir test1 =OK; test2=No balise<2m et test3=OK

si deux satellites défaillants compensent leurs erreurs ;

- niveau d'intégrité 3 correspond aux 3 tests réussis.

Dans d'autres modes de réalisation, seul un ou deux des trois tests sont considérés.

Si le nombre de satellites disponibles est suffisant, la solution MSP dans le mode de réalisation ici mis en œuvre, permet également de détecter et se prémunir contre la défaillance de satellites, par exemple contre 1 satellite défaillants (test 2) à 2 satellites défaillants (test 3).

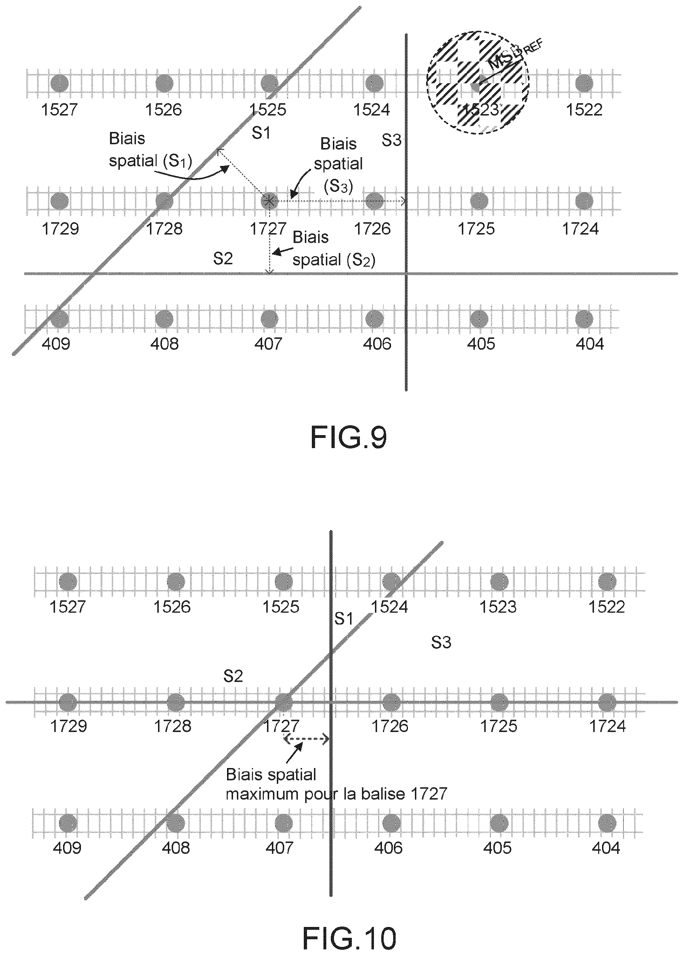

La figure 9 illustre la détermination des biais spatiaux pour une balise telle que considéré dans l'étape 105 : la balise considérée est la balise numérotée 1727 et il est représenté les biais spatiaux pour cette balise relativement à chacun des satellites $S_1$, $S_2$, $S_3$.

Le rayon de protection de taille $MSB_{REF}$ est en outre représenté autour de la balise numérotée 1523.

La figure 10 illustre le biais spatial maximal déterminé pour la balise numérotée 1727 après correction du biais commun tel que considéré dans l'étape 105.

Les figures 9 et 10 représentent les voies en vue de dessus, les balises numérotées 1522 à 1527 étant sur une même voie, les balises numérotées 1724 à 1729 étant sur une autre même voie, et les balises numérotées 404 à 409 étant sur une encore autre voie.

Une solution complète de positionnement GNSS pour l'industrie ferroviaire se doit d'inclure les fonctionnalités suivantes :

- coldstart (position au démarrage) : récupérer la position initiale du train avec identification de la voie ;

- positionnement en voie principale : positionnement du train le long de la voie lorsqu'il circule sur la voie identifiée ;

- résoudre l'ambiguïté de l'aiguillage : pour identifier la voie utilisée lorsqu'un aiguillage est franchi ;

- récupérer la position : récupérer la position en sortie de la zone non accessible au GNSS, avec disponibilité ou non de la position précédente du train.

La solution de positionnement MSP décrite ci-dessus a été décrite dans l'hypothèse d'un train stationnaire (coldstart) avec par exemple, dans un mode de réalisation, les principales étapes suivantes, pour rappel :

- calcul de corrélation, pour chaque balise considérée et chaque satellite considéré, entre les signaux reçus et les signaux prédits (étapes 101-103) ;

- pour chaque balise considérée, calculer le retard de corrélation (= biais temporel) du signal satellite pour chaque satellite ($\Delta T_{Bj,Sk}(= X(S_k, B_j, t)$ (étape 104) ;

- appliquer l'algorithme MSP (étape 105) basé sur un mécanisme d'erreur commun pour détecter la position du train et les satellites problématiques.

Pour cette dernière étape, une mesure précise de $X(S_k,B_j,t)$ est une condition préalable à une bonne détection ; dans le cas du coldstart, une bonne précision sur $X(S_k, B_j, t)$ repose sur les caractéristiques suivantes :

- le caractère stationnaire du train permet une longue intégration de corrélation jusqu'à quelques secondes (voire minutes) pour atténuer l'impact du bruit afin d'avoir un résultat de corrélation stable et fiable ;

- une liste de décalages temporels prédéfinis avec une plage suffisamment petite pour assurer la précision de l'interpolation.

Le procédé selon l'invention décrit ci-dessus est adapté au cas statique, pour consolidation de la détection de voie à l'initialisation, au « cold start » et au cas dynamique, moyennant l'adaptation des temps d'intégration pour les calculs de corrélation. L'instant de passage sur la balise dans le cas dynamique pourrait être un paramètre supplémentaire pour affiner la détection de position. Une version robuste et simple peut s'en affranchir en prenant en compte de temps de détection réguliers et fixes, et il est détecté ainsi la balise la plus proche pour un temps de détection de position estimé aussi.

Exemple de recherche de position quand le train est en mouvement sur une voie (cas dynamique) :
Dans un tel cas, dans un mode de réalisation, on ne considère pour la mise en œuvre de l'algorithme 100 que les balises (ou un sous-ensemble de ces balises) de la base 13 qui y sont identifiées comme situées sur des voies de circulation (ce sous-ensemble peut encore être réduit en ne retenant que les balises situées sur des voies sur lesquelles le train est susceptible de se situer, cette appréciation étant déterminée par exemple en fonction d'un déplacement maximal évalué en fonction des mesures d'une centrale inertielle embarquée et d'une précédente position fiable du train). Ces sous-ensembles de balises sont donc, dans ce cas, les balises $B_i$, i=1 à N, considérées.

Dans un mode de réalisation, le cas dynamique diffère du cas statique en ce qu'en outre, on calcule la corrélation à différents instants, la corrélation étant maximale au moment où le train est au niveau de la balise. En effet, en plus de la détection de balise (maximum de corrélation spatiale), il faut également détecter l'instant pour lequel cette corrélation est maximale (ce qui n'est pas nécessaire en statique).

**Positionnement dynamique** :

Temps d'intégration de corrélation dynamique :
Lorsque le train est en mouvement, le signal GNSS reçu est collecté par le récepteur Rx 11 à partir de différentes positions. Pour les signaux GNSS reçus, en plus de l'impact du bruit/des interférences, une nouvelle ambiguïté de la position de collecte du signal est ainsi introduite.

Un temps d'intégration de corrélation approprié doit être bien défini pour équilibrer les aspects suivants :

- la durée du temps d'intégration doit être aussi longue que possible pour atténuer l'impact du bruit afin d'obtenir un résultat de corrélation suffisamment précis ;

- la durée du temps d'intégration doit être aussi courte que possible pour réduire l'ambiguïté de la position de collecte du signal.

Parallèlement, en tenant compte qu'en positionnement dynamique, pour résoudre les ambiguïtés des aiguillages et la récupération de la position du train en mouvement, il est généralement nécessaire de distinguer des voies, il est défini 2 mètres comme valeur de seuil de portée de collecte du signal, c'est-à-dire :

temps d'intégration de corrélation Tint = 2 m / Vtrain (Vtrain : vitesse du train)

Selon la formule ci-dessus, le temps d'intégration typique est de : 1,3 s pour 5 km/h, 400 ms pour 20 km/h, 120 ms pour 60 km/h, 60 ms pour 120 km/h, 40 ms pour 180 km/h.

Comme résumé ci-dessus, avec un temps d'intégration de corrélation dynamique, le même algorithme peut être utilisé pour le positionnement dynamique.

Détection de voie quand le train se déplace :

Parfois, des signaux de plusieurs dizaines de millisecondes ne suffisent pas à atténuer l'impact du bruit. Dans un mode de réalisation, la méthode suivante est mise en œuvre par le bloc de localisation 121 pour atténuer davantage l'erreur de signal aléatoire en faisant la moyenne des informations MSP :

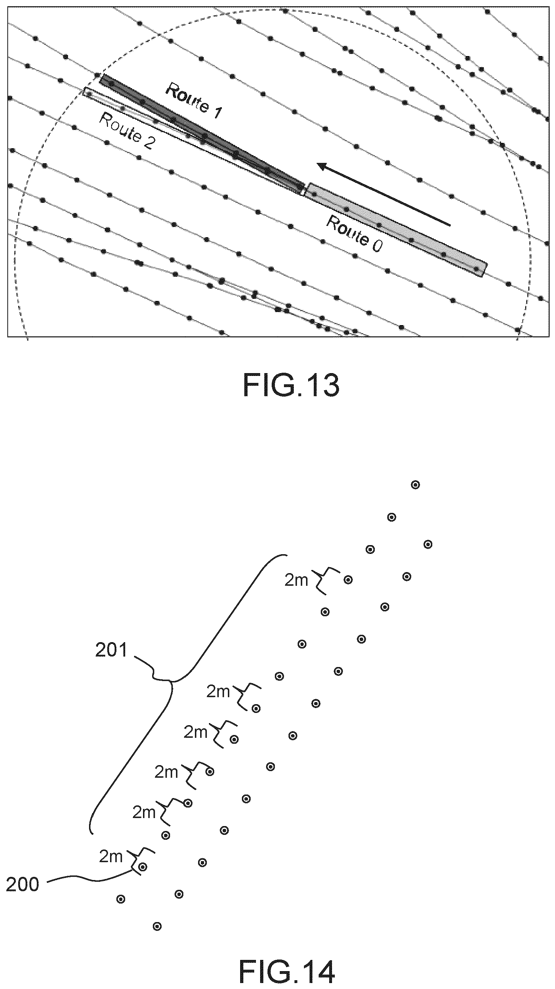

**[0114]** - les balises considérées et leurs positions associées définies dans la base, (les balises considérées correspondent aux seules positions candidates dans un mode de réalisation, il s'agit par exemple des seules balises au sein du cercle d'incertitude tel que 100 mètres autour de la position PVT du train) sont regroupées en différentes trajectoires (routes) près de la voie localisée (autrement dit, on ne cherche que les positions possibles par rapport à une position voie/connue de manière fiable) comme illustré sur la figure 13 représentant partiellement le cercle d'incertitude, les balises (petits ronds), regroupées en les routes 0, 1 et 2, la flèche indiquant la direction de déplacement à déterminer ;

- le calcul de corrélation (étape 103) pour les balises considérées avec un temps d'intégration défini est effectué ;

- pour chaque balise considérée $B_i$, le retard de corrélation $\Delta T_{Bj,Sk}(= X(S_k,B_j,t)$ est calculé pour chaque satellite

- pour chaque route possible (route k) :

   - la balise avec un biais spatial maximal (MSB) minimal est déterminée et est définie comme la position la plus probable sur cette route ;

   - pour cette position la plus probable (correspondant à la balise $B_{j0routek}$), le biais spatial relativement à chaque

satellite $\Delta S_{Bj0\ route\ k,\ Sk}$, k = 1 à s, est enregistré et moyenné sur les N derniers instants de mesure considéré : cf. illustration sur la figure 14, la détection actuelle est référencée 200, les N dernières détections sont repérées par l'accolade 201 ;

- parmi les biais spatiaux moyens pour chaque satellite ci-dessus, choisir le maximum, qui est alors défini comme MSB de la route ;

- sur cette base appliquer une logique de décision analogue à la méthode MSP (étape 105 décrite plus haut) pour déterminer la nouvelle voie après passage d'un aiguillage (ici, uniquement lorsque les routes possibles sont de nouveau au minimum espacées de 4m) :

- il ne doit y avoir qu'un unique MSB inférieur au seuil défini comme la moitié de la distance entre 2 voies (typiquement 2m) ; celui-ci sera retenu comme route vraie ;

- si aucun MSB ne satisfait le seuil défini comme la moitié de la distance entre 2 routes, alors on ne peut pas résoudre la voie et on attend l'itération suivante ;

- si 2 ou plus MSB satisfont le seuil, alors il y a situation d'ambigüité (dû à des satellites biaisés) : on ne peut pas résoudre la voie ; le test est effectué à l'itération suivante.

La méthode peut être utilisée pour détecter la voie pour résoudre l'ambiguïté des aiguillages, ainsi que pour distinguer la voie pour le mouvement du train. Elle peut également être utilisée pour améliorer l'intégrité du positionnement de la voie principale avec la voie déterminée.

**Solutions alternatives de détermination des valeurs de retard $X(S_k, B_i, t)$**

Il existe différentes solutions pour déterminer les valeurs de retard $X(S_k, B_i, t)$.

Une de ces solutions a été décrite dans les étapes 101 à 104 en considérant la balise $B_i$ et l'ensemble des satellites $S_k$, k= 1 à s selon laquelle la corrélation des signaux reçus et théoriquement reçus en $B_i$ est calculée, et le retard $X$ $(S_k, B_i, t)$ est déduit de cette corrélation calculée. Typiquement, si on considère P positions possibles (soit P balises), S satellites et 5 décalages temporels pour la corrélation, alors nous aurons P*S*5 points de corrélation à calculer (avec pour chaque point de corrélation, un calcul du code prédit et de la corrélation avec le signal réellement reçu, puis pour chaque position et chaque satellite, il est calculé un retard Xmax basé sur le résultat de corrélation de 5 décalages temporels en utilisant une interpolation parabolique : ainsi un grand volume de calcul est mis en œuvre.

Dans un mode de réalisation, l'invention met en œuvre, à la place, une solution de détermination des valeurs de retard $X(S_k, B_i, t)$ selon l'une des deux approches décrites plus bas, exploitant la relation entre les retards relatifs à une balise et les retards relatifs à une autre balise, et permettant ainsi de ne calculer la corrélation que pour une balise de référence.

Deux approches sont proposées ici.

Approche 1 :

La corrélation calculée relativement à une des balises, par exemple la balise $B_1$, pour le satellite $S_k$, peut s'exprimer ainsi :

$$\int_{T0}^{T0+Tint} c_{RX,Sk}(t) \cdot c_{calc\ B1,Sk}(t).dt$$

Il en découle qu'entre deux balises, $B_1$, $B_2$, la différence de corrélation est simplement la différence des signaux prédits $c_{calc B1,Sk}(t)$, $c_{calc B2,Sk}(t)$, toutes les balises utilisant la même correction d'erreurs des signaux prédits provenant de $S_k$, il en résulte que :

$$c_{calc\ B1,Sk}(t) - c_{calc\ B2,Sk}(t) = \frac{1}{c}(S_k B_1 - S_k B_2)$$

c est la vitesse de la lumière dans le vide ; où $S_k B_1$, respectivement $S_k B_2$, est la distance entre le satellite $S_k$ et la balise $B_1$,

respectivement la distance entre le satellite $S_k$ et la balise $B_2$.

En utilisant cette approche, le bloc de localisation 121 détermine le retard X($S_k$, $B_i$, t) d'une balise $B_i$ quelconque par « translation », à la place des étapes 101 à 104, à partir du retard déterminé pour une balise de référence $B_o$ :

$$X(S_k, B_i, t) = X(S_k, B_0, t) + \frac{1}{c}(S_k B_i - S_k B_0),$$

où $S_k B_0$, respectivement $S_k B_i$, est la distance entre le satellite $S_k$ et la balise $B_0$, respectivement la distance entre le satellite $S_k$ et la balise $B_i$.

Approche 2 :

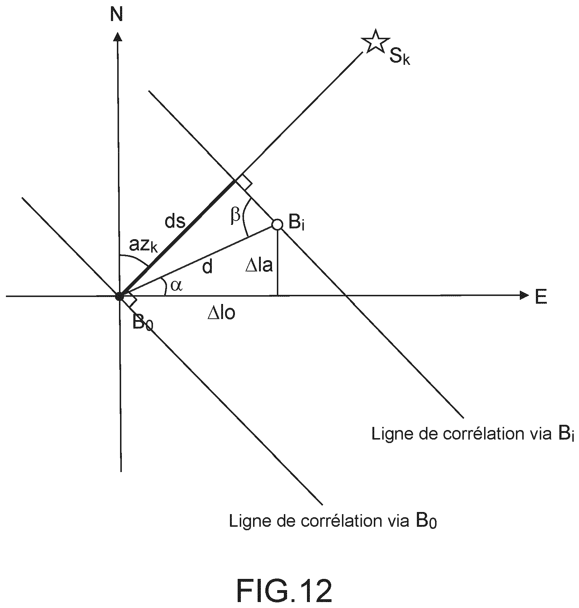

Cette approche 2 est basée sur la notion de *ligne de corrélation.* D'après la formule de corrélation, en des positions (i.e. entre des balises) qui se trouvent à la même distance du satellite $S_k$, il y a le même signal prédit et donc le même résultat de corrélation. Ces positions (balises) sont sur une même ligne sur le sol, appelée ligne de corrélation. La différence entre les retards relatifs à deux balises quelconques est en fait la distance entre ces lignes de corrélation sur lesquelles se situent ces deux balises. La figure 12, illustre, parmi l'ensemble des points signalant des positions de balises, la ligne de corrélation sur laquelle se trouve la balise $B_0$ et la ligne de corrélation sur laquelle se trouve une autre balise, $B_i$ et la distance, ds, entre ces deux lignes de corrélation.

En utilisant cette approche, à la place des étapes 101 à 104, le bloc de localisation 121 détermine le retard $X(S_k, B_i, t)$ d'une balise $B_i$ quelconque par « translation » à partir du retard déterminé pour une balise de référence $B_0$ à l'aide de la formule suivante

$$X(S_k, B_i, t) = X(S_k, B_0, t) + ds * \cos(el_k)/0.3$$

où

$az_k$, $el_k$: angles d'azimut, respectivement d'élévation du satellite $S_k$;

$\alpha$ : angle entre la droite passant par $B_0$ et $B_i$ et l'axe E ;

$\beta$ : angle entre la droite passant par $B_0$ et $B_i$ and la ligne de corrélation passant par $B_i$ ;

d : distance entre les balises $B_0$, $B_i$;

ds : distance suivant la ligne du satellite $S_k$ dans le plan, entre les balises $B_0$, $B_i$ (autrement dit, c'est le projeté de d suivant $S_k B_0$)

les calculs suivants étant effectués :

$\Delta$la = latitude($B_0$) - latitude($B_i$), $\Delta$lo = longitude($B_0$)- longitude($B_i$), les coordonnées dites longitude(), latitude() des balises $B_0$, $B_i$ étant données dans un repère NED (ou dans tout repère orthogonal également dans le plan local tangent) ;

$$\alpha = \arctan(\Delta la / (\Delta lo * \cos(latitude(B_0))$$

$$\beta = az_k + \alpha$$

$$ds = d * \sin(\beta)$$

et enfin : $X(S_k, B_i, t) = X(S_k, B_0, t) + ds * \cos(el_k)/0.3$.

La mise en œuvre de l'une ou l'autre de ces deux approches permet de diminuer de façon importante la charge de calcul nécessaire pour mettre en œuvre la solution de localisation selon l'invention.

Des tests ont été réalisés à partir de signaux réels collectés depuis les voies, permettant de déduire le retard de corrélation X() pour sept balises par « translation » à partir d'une autre balise de référence. Et la différence entre les retards obtenus par translation et ceux effectivement mesurés par calcul de corrélation a été calculée : elle est d'environ 0,1 m en moyenne et au maximum de 0,39 m et les deux approches donnent des résultats comparables avec une différence moyenne de 0,02 m et une différence maximum de 0,1m.

Par ailleurs, il est nécessaire d'utiliser des valeurs précises des retards de corrélation dans la solution de localisation selon l'invention. Or il n'est pas connu la précision du retard de corrélation X() obtenu sur la base des calcul de corrélation utilisant les mesures de signaux reçus et calcul des signaux théoriques en les balises. L'imprécision peut provenir de buit ou d'interférence sur le signa GNSS et/ou d'erreurs d'interpolation.

Les valeurs translatées de retard de corrélation sont utilisées pour évaluer la précision des retards de corrélation « mesurés » et valider/invalider des satellites : cf. les deux exemples de modes de réalisation décrits ci-après.

Par exemple, en considérant deux balises $B_{01}$, $B_{02}$ (ici distantes de 13,5 m), on détermine le $X(S_k, B_i, t)$ « mesuré », i = 01, 02, par calcul effectif de corrélation (issues de mesures en ces balises) relative à ces balises, en mettant en œuvre les étapes 101 à 104.

Dans un premier mode de validation, la comparaison des retards de corrélation en une ou des balises obtenus par translation (par une des deux approches décrites ci-dessus) et de ceux effectivement « mesurés » en cette/ces balise(s) (par les étapes 101 à 104) est utilisée pour évaluer la précision des retards de corrélation « mesurés » et valider/invalider des satellites. En partant de ce $X(S_k, B_i, t)$ ainsi calculé (mesuré) , i = 01, par translation cette fois à partir de la balise de référence $B_{01}$, il est déterminé un $X(S_k, B_i, t)_{i=02}$ translaté. Les différences entre les $X(S_k, B_i, t)_{02}$ mesuré et translaté sont alors comparées, et si la différence dépasse un seuil prédéterminé, $S_k$ est exclu de l'ensemble des satellites utilisés par le bloc de localisation 121 pour mettre en œuvre la détermination de la localisation à l'étape 105.

Dans un deuxième mode de validation, chacune des balises $B_{01}$, $B_{02}$ est utilisée comme balise de référence par le bloc de localisation 121 pour calculer par translation, par l'une des deux approches décrites plus haut, le retard de corrélation $X(S_k, B_j, t)$, j = 1 à r.

Alors pour chaque balise Bj, j = 1 à r, le bloc de localisation 121 obtient une première valeur $X(S_k, B_j, t)_{01}$ par translation à partir du $X(S_k, B_{01}, t)$ mesuré et une deuxième valeur $X(S_k, B_j, t)_{02}$ par translation à partir de $X(S_k, B_{02}, t)$ mesuré, Les différences entre $X(S_k, B_j, t)_{01}$ et $X(S_k, B_j, t)_{02}$ translaté sont alors comparées, j = 1 à r et si la différence dépasse un seuil prédéterminé (propre au satellite $S_k$ ou commun à différents satellites), $S_k$ est exclu de l'ensemble des satellites utilisés par le bloc de localisation 121 pour mettre en œuvre la détermination de la localisation à l'étape 105.

On notera par ailleurs, qu'il a été décrit plus haut des mesures des codes dans les signaux de positionnement. L'invention peut également être mise en œuvre en mesurant, à la place des mesures de codes ou en plus, les phases des porteuses des signaux de positionnement.

Le procédé 100 peut être mis en œuvre par l'exécution d'instructions logicielles sur un processeur, comme décrit plus haut. Alternativement, l'un et/ou l'autre peuvent être mis en œuvre par un hardware dédié, typiquement un circuit intégré numérique, soit spécifique (ASIC) ou basé sur une logique programmable (par exemple FPGA/Field Programmable Gate Array).

Le procédé selon l'invention est bien sûr utilisable, au-delà du domaine ferroviaire, dans tout système dans lequel il est nécessaire d'estimer la position d'un engin dont le déplacement n'est possible que sur un ensemble prédéterminé et fini de trajectoires, une base de données stockant le géo-référencement de balises virtuelles se trouvant sur les trajectoires.

**Revendications**

1. Procédé de localisation d'un engin (4) adapté pour se déplacer sur un ensemble de trajectoire(s) prédéfinie(s) (V1,V2),

   un récepteur satellite embarqué dans l'engin étant adapté pour recevoir à un instant t des signaux de géopositionnement en provenance d'un système de satellites comprenant au moins s satellites Sk, k=1 à s et s supérieur ou égal à 3 ;
   un bloc électronique de traitement (10) comprenant une base de données (13) stockant les coordonnées géographiques Pj de balises virtuelles Bj, j = 1 à N, réparties le long des trajectoires dudit ensemble de trajectoire(s) ;
   ledit procédé comprenant les étapes suivantes mises en œuvre par le bloc électronique de traitement (10) à un instant t de localisation :

   i1/ pour chaque balise Bj, j = 1 à N :

- pour chaque satellite Sk pour k = 1 à s :

  ■ calcul du retard, entre le signal de géostationnement reçu par le récepteur satellite à l'instant t en provenance du satellite Sk et le signal de géostationnement théorique calculé comme devant être reçu en provenance du satellite Sk à l'instant t à la position de la balise virtuelle Bi telle définie par les coordonnées géographiques Pj de Bj dans la base de données, ledit retard étant nommé retard de corrélation, $X(S_k, B_j)$ ;
  ■ une valeur représentative du retard de corrélation $X(S_k,B_j)$ est convertie en une distance correspondante, $\Delta S_{Bj,Sk}$, nommée biais spatial, en multipliant cette valeur représentative du retard de corrélation $X(S_k, B_j)$ par c, vitesse de la lumière dans le vide et en la divisant par cos $el_k$, où $el_k$ est l'élévation du satellite Sk ;

- pour chaque balise Bj, j = 1 à N, il est déterminé un biais spatial maximum $MSB_{Bj}$ :

$$MSB_{Bj} = MAX_{k=1 \text{ à } s}\{\Delta S_{Bj,Sk}\}$$

i2/ les biais spatiaux maximum $MSB_{Bj}$, j= 1 à N sont comparés à un seuil prédéfini $MSB_{REF}$ : suite à cette comparaison, si seule une balise a un biais spatial maximum $MSB_{Bj}$ inférieur à $MSB_{REF}$, cette balise est alors détectée comme celle au niveau de laquelle l'engin se trouve à l'instant de localisation.

2. Procédé de localisation selon la revendication 1, selon lequel l'une des dispositions suivantes est en outre mise en œuvre par le bloc de traitement à l'étape i2 :

   - i2_1/ si seules deux balises ont leur biais spatial maximum inférieur à $MSB_{REF}$ et qu'elles sont adjacentes sur la même voie, il est considéré que l'engin se trouve entre les deux balises ;
   - i2_2/ si plus d'une balise a un biais spatial maximum inférieur à $MSB_{REF}$ (optionnellement en-dehors du cas juste ci-dessus) : une situation d'ambiguïté est détectée et il est considéré que la localisation ne peut être effectuée ;
   - i2_3/ si seules deux balises ont leur biais spatial maximum inférieur à $MSB_{REF}$ et qu'elles sont adjacentes sur la même voie, il est considéré que l'engin se trouve entre les deux balises ; en-dehors de ce cas, si plus d'une balise a un biais spatial maximum inférieur à $MSB_{REF}$, il est considéré que la localisation ne peut être effectuée ;
   - c i2_4/ si aucune balise n'a un biais spatial maximum inférieur à $MSB_{REF}$, cela indique l'existence de satellites défectueux, une situation d'ambiguïté est ainsi détectée et il est considéré que la localisation ne peut être effectuée.

3. Procédé de localisation selon la revendication 1 ou 2, selon lequel les étapes i1 et i2 sont itérées relativement à chaque sous-ensemble de satellites comportant s-1 des s satellites à la place des s satellites considérés à l'itération précédente pour s≥5, lorsque, suite à ladite comparaison de l'itération précédente, seule une balise avait un biais spatial maximum $MSB_{Bj}$ inférieur à $MSB_{REF}$ et si à l'itération courante, pour chacun des sous-ensemble de satellites, l'étape de comparaison détecte la même seule balise qu'à l'itération précédente correspondant à un niveau d'intégrité donné, ladite balise est considérée comme détectée avec ledit niveau d'intégrité donné augmenté de un.

4. Procédé de localisation selon la revendication 1 ou 2 ou 3, selon lequel les étapes i1 et i2 sont itérées relativement à chaque sous-ensemble de satellites comportant s-1 des s satellites à la place des s satellites considérés à l'itération précédente pour s≥5, et si à l'itération précédente, aucune balise n'avait un biais spatial maximum $MSB_{Bj\_pos}$ inférieur à $MSB_{REF}$ et qu'à l'itération courante, une seule balise a un biais spatial maximum $MSB_{Bj}$ inférieur à $MSB_{REF}$, cette balise est alors détecté comme celle au niveau de laquelle l'engin se trouve à l'instant de localisation et le s$^{\text{ème}}$ satellite est identifié comme défaillant.

5. Procédé de localisation selon l'une quelconque des revendications précédentes, selon lequel ladite valeur représentative du retard de corrélation $X(S_k,B_j)$ est égale à la différence entre ledit retard de corrélation $X(S_k, B_j)$ et un biais nommé $BC_{Bj}$, qui est une estimation du biais temporel associé à la balise Bj et commun à tous les satellites et permettant de minimiser $MSB_{Bj}$.

6. Procédé de localisation selon l'une quelconque des revendications précédentes, selon lequel ladite valeur représentative du retard de corrélation $X(S_k,B_j)$ est égale à la différence entre ledit retard de corrélation $X(S_k,B_j)$ et un biais

nommé $BC_{Bj} = \frac{1}{s}\sum_{k=1}^{s} X(S_k, B_j)$ .

**7.** Procédé de localisation selon l'une quelconque des revendications précédentes,, selon lequel le bloc de traitement met en œuvre l'une des dispositions suivantes i1a, i1b, i1c, pour, en considérant la balise Bi, mettre en œuvre l'étape i1 de calcul des retards, $X(S_k, B_i, t)$ pour k= 1 à s :

i1a/ calcul de la corrélation entre ledit signal de géostationnement reçu et ledit signal de géostationnement théorique calculé en $B_i$, ledit retard $X(S_k, B_i, t)$ étant calculé en fonction au moins de ladite corrélation calculée ;

i1 b/ le retard $X(S_k, B_i, t)$ est calculé, par translation, à l'aide de la formule suivante :

$$X(S_k, B_i, t) = X(S_k, B_0, t) + \frac{1}{c}(S_k B_i - S_k B_0),$$

où

$S_k B_0$, respectivement $S_k B_i$, est la distance entre le satellite $S_k$ et une balise de référence $B_0$, respectivement la distance entre le satellite $S_k$ et la balise $B_i$,

$X(S_k, B_0, t)$ est le retard entre le signal de géostationnement reçu par le récepteur satellite à l'instant t en provenance du satellite $S_k$ et le signal de géostationnement théorique calculé comme devant être reçu en provenance du satellite $S_k$ à l'instant t à la position de la balise virtuelle $B_0$ telle définie par les coordonnées géographiques P0 de $B_0$ dans la base de données,

c est la vitesse de la lumière dans le vide ;

i1 c/ le retard $X(S_k, B_i, t)$ est calculé, par translation, à l'aide de la formule suivante :

$$X(S_k, B_i, t) = X(S_k, B_0, t) + ds * \cos(el_k)/0.3$$

où $B_0$ est une balise de référence,

$\Delta$la = latitude($B_0$) - latitude($B_i$), $\Delta$lo = longitude($B_0$)- longitude($B_i$)$\alpha$ = arctan($\Delta$la / ($\Delta$lo *cos(latitude($B_0$) ))

$$\beta = az_k + \alpha$$

$$ds = d * \sin(\beta)$$

où latitude( ), longitude( ) sont les coordonnées dans un repère orthogonal dans le plan local tangent.

**8.** Procédé de localisation selon la revendication 7, selon lequel le bloc de traitement met en œuvre au moins une des dispositions suivantes 4.1, 4.2 :

4.1 par la mise en œuvre de la disposition i1a, $X(S_k, B_{01}, t)$ et $X(S_k, B_{02}, t)$ sont calculés ; puis en considérant $B_{01}$ comme balise de référence et par la mise en œuvre de l'une des formules en i1b ou i1c, le retard en $B_{02}$ est déterminé cette fois par translation en considérant $B_{01}$ comme balise de référence et est nommé $X(S_k, B_{02}, t)_{01}$ ; et en fonction d'au moins la différence entre $X(S_k, B_{02}, t)$ et $X(S_k, B_{02}, t)_{01}$, le satellite $S_k$ est exclu de l'ensemble des satellites pris en considération pour l'étape i3 d'estimation de la localisation de l'engin en fonction desdites valeurs représentatives d'écarts entre lesdits retards calculées ;

4.2 effectuer l'étape suivante pour des balises Bi, i = 1 à r :

par la mise en œuvre de l'une des formules en i1b ou i1c : un premier retard $X(S_k, B_i, t)_{01}$ est déterminé en considérant $B_{01}$ comme balise de référence et un deuxième retard $X(S_k, B_i, t)_{02}$ est déterminé en considérant $B_{02}$ comme balise de référence ; et en fonction d'au moins les différences entre $X(S_k, B_i, t)_{01}$ et $X(S_k, B_i, t)_{02}$, i = 1 à r, le satellite $S_k$ est exclu de l'ensemble des satellites pris en considération pour l'étape i3 d'estimation de la localisation de l'engin en fonction desdites valeurs représentatives d'écarts entre lesdits retards calculées.

**9.** Procédé de localisation selon l'une quelconque des revendications précédentes, selon lequel chaque balise considérée est espacée de ses voisines les plus proches d'une distance D égale à la distance entre deux voies voisines et le seuil prédéfini MSB$_{REF}$ est pris égal à D/2.

10. Programme d'ordinateur, destiné à être stocké dans la mémoire d'un dispositif électronique de localisation (121) et comprenant en outre un microcalculateur, ledit programme d'ordinateur comprenant des instructions qui, lorsqu'elles sont exécutées sur le microcalculateur, mettent en œuvre les étapes d'un procédé selon l'une quelconque des revendications précédentes.

11. Bloc électronique de traitement (10) pour la localisation d'un engin (4) adapté pour se déplacer sur un ensemble de trajectoire(s) prédéfinie(s) (V1,V2) et embarquant un récepteur satellite (11) pour recevoir à un instant t des signaux de géopositionnement en provenance d'un système de satellites comprenant au moins s satellites Sk, k=1 à s et s supérieur ou égal à 3 ;

le bloc électronique de traitement (10) comprenant une base de données (13) stockant les coordonnées géographiques Pj de balises virtuelles Bj, j = 1 à N, réparties le long des trajectoires dudit ensemble de trajectoire(s) ;
ledit bloc électronique de traitement (10) étant adapté pour mettre en œuvre les opérations suivantes, à un instant t de localisation :

i1/ pour chaque balise Bj, j = 1 à N :

- pour chaque satellite Sk pour k = 1 à s :

calcul du retard, entre le signal de géostationnement reçu par le récepteur satellite à l'instant t en provenance du satellite Sk et le signal de géostationnement théorique calculé comme devant être reçu en provenance du satellite Sk à l'instant t à la position de la balise virtuelle Bi telle définie par les coordonnées géographiques Pj de Bj dans la base de données, ledit retard étant nommé retard de corrélation, X($S_k$, $B_j$) ;
une valeur représentative du retard de corrélation X($S_k$, $B_j$) est convertie en une distance correspondante, $\Delta S_{Bj,Sk}$, nommée biais spatial, en multipliant cette valeur représentative du retard de corrélation $X(S_k,B_j)$ par c, vitesse de la lumière dans le vide et en la divisant par cos el$_k$, où el$_k$ est l'élévation du satellite Sk ;

- pour chaque balise Bj, j = 1 à N, il est déterminé un biais spatial maximum MSB$_{Bj}$ :

$$\mathrm{MSB}_{Bj} = \mathrm{MAX}_{k=1\,\text{à}\,s}\{\Delta S_{Bj,Sk}\}$$

i2/ les biais spatiaux maximum MSB$_{Bj}$, j= 1 à N sont comparés à un seuil prédéfini MSB$_{REF}$: suite à cette comparaison, si seule une balise a un biais spatial maximum MSB$_{Bj}$ inférieur à MSB$_{REF}$, cette balise est alors détectée comme celle au niveau de laquelle l'engin se trouve à l'instant de localisation.

FIG.1

101

102

100

$C_{calc\,B_i,Sk}(t)$

$C_{RX,Sk}(t)$

103

104

CALC. CORRELATION

$X(Bi,Sk,t)$

105

LOCALISATION MSP

FIG.2

FIG.3

FIG.4

105

$X(S_k, B_{j,t})$  j=1 à N
k=1 à s

1051_1  j=1 à N : DET. $BC_{Bj}$

1051_2

1051

j=1 à N : CALC. $\Delta S_{Bj,Sk} = \dfrac{c \times (X(Sk,Bj) - BC_{Bj})}{\cos(el_k)}$

j=1 à N : DET. $MSB_{Bj} = \underset{k=1 \text{ à } s}{\text{Max}} \Delta S_{Bj,Sk}$

1051_3

COMP. $\{MSB_{Bj}, MSB_{REF}\}$

1051_4

TEST 1

1051_5

1052  TEST 2

1053  TEST 3

FIG.5

FIG.6

Nord $H_k$

$az_k$

$az'_k = \theta - az_k$

$\theta$

FIG.7

FIG.8

1527 1526 1525 1524 1523 1522

Biais
spatial (S₁)

S1

Biais
spatial
(S₃)

S3

MSᵦREF

1729 1728 1727 1726 1725 1724

Biais
spatial (S₂)

S2

409 408 407 406 405 404

## FIG.9

1527 1526 1525 1524 1523 1522

S1

S3

S2

1729 1728 1727 1726 1725 1724

Biais spatial
maximum pour la balise 1727

409 408 407 406 405 404

## FIG.10

FIG.11

Légende
◯ 1 Balise < 2m (ou même voie)
⬤ 0 Balise < 2m
⬤ plusieurs balises < 2m

s = ?

=3  =4  =5  >=6

test 1   test 1   test 1

test 2   test 2   test 2   test 2

test 3   test 3   test 3   test 3

0 détection
(=0 test réussi)

Balise détectée
Niveau d'intégrité 1
(=1 test réussi)

Balise détectée
Niveau d'intégrité 2
(=2 tests réussis)

Balise détectée
Niveau d'intégrité 3
(=3 tests réussis)

EP 4 711 822 A1

FIG.12

FIG.13

FIG.14

## RAPPORT DE RECHERCHE EUROPEENNE

Europäisches
Patentamt
European
Patent Office
Office européen
des brevets

Numéro de la demande

EP 25 19 8037

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 3 751 315 A1 (THALES SA [FR]) 16 décembre 2020 (2020-12-16) * figures 1-3 * * alinéas [0054] - [0075] * ----- | 1-11 | INV. G01S19/50 B61L25/02 |
| A | KUMAR RAKESH ET AL: "A Novel GNSS Positioning Technique for Improved Accuracy in Urban Canyon Scenarios Using 3D City Model", GNSS 2014 - PROCEEDINGS OF THE 27TH INTERNATIONAL TECHNICAL MEETING OF THE SATELLITE DIVISION OF THE INSTITUTE OF NAVIGATION (ION GNSS+ 2014), THE INSTITUTE OF NAVIGATION, 8551 RIXLEW LANE SUITE 360 MANASSAS, VA 20109, USA, 12 septembre 2014 (2014-09-12), pages 2139-2148, XP056007777, * sections: Introduction; Methodology. * ----- | 1-11 | |

**DOMAINES TECHNIQUES RECHERCHES (IPC)**

G01S
B61L
G01C

Le présent rapport a été établi pour toutes les revendications

| Lieu de la recherche | Date d'achèvement de la recherche | Examinateur |
|---|---|---|
| Munich | 23 janvier 2026 | Tancredi, Urbano |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 19 8037

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-01-2026

| Document brevet cité au rapport de recherche | Date de publication | Membre(s) de la famille de brevet(s) | Date de publication |
|---|---|---|---|
| EP  3751315      A1 | 16-12-2020 | CA     3083378 A1 | 13-12-2020 |
| | | CN   112083458 A | 15-12-2020 |
| | | EP     3751315 A1 | 16-12-2020 |
| | | US   2022135096 A1 | 05-05-2022 |
| | | WO   2020249874 A1 | 17-12-2020 |

EPO FORM P0460

Pour tout renseignement concernant cette annexe : voir Journal Officiel de l'Office européen des brevets, No.12/82